# EUROPÄISCHE PATENTSCHRIFT

(11) **EP 3 415 004 B1**
(45) Veröffentlichungstag und Bekanntmachung des Hinweises auf die Patenterteilung: **20.10.2021**
(21) Anmeldenummer: 17175891.5
(22) Anmeldetag: 14.06.2017
(51) Int. Cl.: A01M 21/04

(54) **UNKRAUTBEKÄMPFUNG**
WEED CONTROL
DÉSHERBAGE

(43) Veröffentlichungstag der Anmeldung: 19.12.2018
(73) Patentinhaber: Birchmeier Sprühtechnik AG, 5608 Stetten (CH)
(72) Erfinder: ZWAHLEN, Jürg, 9495 Triesen (LI); WEITNAUER, Adrian Eugen, 8752 Näfels (CH); SCHÄDLER, Walter, 9495 Triesen (LI)
(74) Vertreter: Dittmann, Rolf

(56) Entgegenhaltungen:
- WO-A1-98/07314
- WO-A1-2015/114884
- DE-A1-102004 061 239
- JP-A- H0 556 739
- JP-A- H04 197 125
- RU-C2- 2 581 481

## Beschreibung

Die Erfindung betrifft ein Gerät zur Bekämpfung von unerwünschtem Pflanzenwuchs nach dem Oberbegriff des Anspruchs 1 sowie ein diesbezügliches Verfahren zur Unkrautbekämpfung nach Anspruch 13.

Die Erfindung betrifft speziell eine Methode und ein Gerät zur Bekämpfung von unerwünschtem Pflanzenwuchs mittels Elektrizität. Allgemeine Ansätze für eine elektrische Unkrautvernichtung wurden schon zuvor vorgeschlagen, jedoch waren diese wohl nicht in zufriedenstellender Weise ausführbar und erfolgreich, was speziell darin zu sehen ist, da sich bis dato keine Nachhaltigen und/oder verbreiteten derartigen Produkte am Markt etabliert haben. Beispielsweise ist aus DE 196 40 641 ein Verfahren zur elektronischen Erkennung von Standorten von Unkräutern beschrieben, welche dann mit sogenannten, aber nicht weiter beschriebenen elektrischen Blitzschlagaktoren" bekämpft werden. In CH 707 476 wird eine elektrische Unkraut- und Schädlingsbekämpfung vorgeschlagen, bei welcher hochfrequente Hochspannungspakete von 10 bis 50 kV mit einer Frequenz von etwa 1 MHz mit einer Lanze auf die Pflanzenspitzen übertragen werden. Eine Kopplung mit dem Erdboden wird dabei über eine spezielle Koppelplatte hergestellt, welche zum Erdboden einen Kondensator bildet dessen Kapazität für die verwendete Hochfrequenz von 1 MHz hinreichend leitfähig ist.

Weitere Ansätze zur Verwendung von Elektrizität in der Unkrautbekämpfung sind z.B. auch in JP 4 197125, JP H05 56739, RU 2 581 481, JP 2003 250421, WO 15 114884 oder WO 16 016627 vorgeschlagen. Beispielsweise wird in WO 98 07314 ein elektrisches Feld in der Erde erzeugt, bevor der Samen von Nutzpflanzen eingebracht wird, um mittels diesem elektrischen Feld zwischen einem Lokal an der Saatstelle tief in die Erde eingebrachten Applikator-Paar, allfällig vorhandene Fremdsamen in der Erde zu Schädigen. In der Praxis haben sich obige Vorrichtungen jedoch nicht bewährt, d.h. das Unkraut wird von diesen allenfalls oberflächlich geschädigt, sodass es allenfalls lahmt oder teilweise abstirbt, aber nicht hinreichend geschädigt wird um ein baldiges Wiederausschlagen zu verhindern.

Es erschein zwar allenfalls möglich, dass mit den erwähnten Vorrichtungen eine gewisse Wirkung erzielbar ist, wenn die Einwirkungszeit verlängert, regelmäßig wiederholt und/oder die zugeführte elektrische Leistung entsprechend erhöht wird - was im Endeffekt eine thermische Schädigung der Pflanze bewirkt. Derartiges macht solche Geräte aber teuer, unhandlich und in der Handhabung ineffizient. Auch ist es nicht zielführend, mit der eingekoppelten Elektrizität die ganze Umgebung aufzuheizen und dabei das Unkraut thermisch zu zerstören, da hierfür z.B. ein klassisches Abflammgerät effizienter ist.

In anderen, artfremden technischen Gebieten wie etwa der Insektenvernichtung, ist eine Anwendung von Hochspannung zum Töten der Tiere bekannt. Eine solche Elektrokution der Insekten erfolgt z.B. in meist mit UV-Licht ausgestatteten elektrischen Insektenvernichtern oder in DE 10 2004 061239, welches dazu ausgebildet ist, mit einem Spannungsfunkengeber an einer Spitze durch die Luft extern vom Gerät nach außen hin einen langgestreckten Funken abzugeben um Tiere zu töten.

Es ist eine Aufgabe der vorliegenden Erfindung, ein Verfahren, sowie eine elektrische Vorrichtung bereitzustellen, mit welcher eine Unkrautvernichtung bzw. eine Schädigung von unerwünschtem Pflanzenwuchs durchführbar ist. Spezielle Aspekte dabei sind unter anderem ein niedriger Energieaufwand und somit geringer Stromverbrauch, eine geringe Baugrösse, speziell für eine tragbare Ausführung, eine einfache Handhabung in der Bekämpfung, geringe Gerätekosten, etc.

Es ist dabei ebenfalls eine Aufgabe, bei der Bekämpfung von unerwünschten Pflanzen eine Schädigung der gewollten Pflanzenumgebung weitgehend zu verhindern, was bei den derzeit üblichen Verfahren wie z.B. Abflammen, Herbizideinsatz, Heißwasser, Wasserdampf etc. kaum erreicht werden kann. Eine weitere Absicht besteht auch darin, die Beeinträchtigung der Umwelt zu minimieren, wie diese beispielsweise beim Einsatz von Pestiziden auftritt.

Ein Teilaspekt dieser Aufgabe ist auch die Bereitstellung von zugehörigen Applikatoren, mit welchen die Bekämpfung der Pflanzen durchgeführt wird, vorzugsweise in einfach austauschbarer Form.

Diese Aufgaben werden erfindungsgemäß durch die Merkmale der unabhängigen Ansprüche und/oder durch Merkmale der abhängigen Ansprüche gelöst bzw. diese Lösungen weitergebildet.

Die vorliegende Erfindung betrifft ein Gerät zur Bekämpfung unerwünschter Bodenvegetation, welches eine elektrische Spannungsversorgung zur Bereitstellung einer Versorgungsspannung aufweist. Die Spannungsversorgung stellt dabei eine Versorgungsspannung im Klein- oder Niederspannungsbereich bereit, also eine Spannung kleiner 1 kV, wie z.B. eine Batterie, ein Netzkabel, eine Solarzelle, etc.

Weiters ist eine elektrische Hochsetzschaltung zur Bereitstellung einer Hochspannung aus der Versorgungsspannung vorhanden, welche aus der Versorgungsspannung eine Hochspannung z.B. im Bereich größer 1 kV, speziell eine Gleichspannung in Größenordnung von 20 bis 30 kV, bereitstellt.

Mit zumindest einem Applikator zur Übertragung von Hochspannungspulsen auf die unerwünschte Bodenvegetation, werden dann Hochspannungspulse auf die unerwünschte Bodenvegetation übertragen.

Erfindungsgemäß ist dabei im elektrischen Pfad zum Applikator ein kapazitiv wirkendes elektrisches Speicherelement für die Hochspannung angeordnet, sowie ein Pulsformer, welcher im elektrischen Pfad zwischen dem Speicherelement und zumindest einer Applikationselektrode des Applikators angeordnet ist.

Der Pulsformer kann dabei derart ausgebildet sein, dass mit einer definierten Mindestspannung der Hochspannung auf die unerwünschte Bodenvegetation eingewirkt wird, und diese Einwirkung einen hochfrequenten Anteil aufweist. Dabei können insbesondere Parameter der Hochspannungspulse variierbar sein.

Der Pulsformer kann dabei speziell jeweils im Applikator und in direkter örtlicher Nähe zu der Applikationselektrode angeordnet sein.

Der Pulsformer kann beispielsweise als eine definierte Funkenstrecke ausgebildet sein. Insbesondere kann eine solche definierte Funkenstrecke mit zumindest zwei Elektroden in definiertem Elektrodenabstand ausgebildet sein. Die Funkenstrecke kann sich dabei auch in einem hermetisch abgeschlossenen und definierten Medium befinden.

Das kapazitiv wirkende elektrische Speicherelement kann dabei als Hochspannungsspeicher ausgebildet sein.

Die Hochsetzschaltung kann dabei z.B. ausgebildet sein mit einem Flyback-Konverter, einer Speicherdrossel, einem magnetischen Hochsetz-Übertrager, einer Ladungspumpe, einem Bandgenerator, einem Tesla-Transformator, einem Marx-Generator, und/oder einem Piezo-Generator.

Dabei kann eine elektrisch leitende Verbindung vom einem ersten Pol des Speicherelements zu einem Untergrund oder Boden der Bodenvegetation bereitgestellt werden. Alternativ kann auch eine kapazitive elektrische Verbindung vom dem ersten Pol des Speicherelement zu einem Untergrund oder Boden der Bodenvegetation erfolgen. Eine derartige Koppelplatte als Erdverbindung zum Boden ist dabei vorzugsweise großflächig ausgebildet, beispielsweise mit einer Koppelfläche von mehreren Quadratdezimetern. Der elektrische Pfad der Hochspannung kann dann vom Boden über die Bodenvegetation, den Applikator, den Pulsformer zu einem zweiten Pol des Speicherelements geschlossen werden. Das Gerät kann dabei als handhaltbares Basisgerät ausgebildet sein. Bei diesem Basisgerät können unterschiedliche Applikatoren, unter Herstellung einer mechanischen und elektrischen Verbindung, auswechselbar sein. In einer anderen Ausführung kann das Gerät auch als Anbaugerät an ein Fahrzeug ausgebildet sein, insbesondere wobei die Versorgungsspannung dabei auch vom Fahrzeug bereitgestellt werden kann. In einer nochmals anderen Ausführung kann das Gerät auch als Mäher ausgebildet sein, wobei speziell eine Schneide des Mähers als Applikator ausgebildet sein kann.

Es sind ebenfalls zugehörige austauschbare Applikatoren für ein erfindungsgemäßes Gerät vorgesehen, wobei der austauschbare Applikator z.B. ausgebildet sein kann mit zumindest einer Elektrode als einer spitzförmigen Lanze, einer oder mehrerer Plattenelektroden, einem Greifer, einer Schneide, und/oder einem Rad. Der Applikator kann dabei auch mit einer integrierten oder externen Erdungselektrode ausgebildet sein.

Ein derartiger austauschbarer Applikator kann dabei speziell den Pulsformer aufweisen bzw. umfassen. Auch kann in einer Ausführungsform das Speicherelement Teil des austauschbaren Applikators sein. Der Pulsformer kann als Funkenstrecke zumindest teilweise im Applikator ausgebildet sein, beispielsweise gänzlich im Applikator oder in einer Schnittstelle eines Kopplungsstück zwischen dem Applikator und einem Basisgerät, wobei auch je eine Elektrode der Funkenstrecke dem Basisgerät und eine dem Applikator zugeordnet sein kann.

Die Erfindung betrifft ebenfalls eine Methode zur Unkrautbekämpfung oder anders ausgedrückt ein Verfahren zur Bereitstellung von elektrischen Impulsen zur Vernichtung von Unkraut. Bei diesem erfolgt ein Versorgen einer elektrischen Hochsetzschaltung mit einer elektrischen Nieder- oder Kleinspannung von weniger als 1kV, ein Hochsetzen der Nieder- oder Kleinspannung durch die Hochsetzschaltung zu einer Hochspannung von mehr als 1kV, insbesondere von 10 bis 40kV, sowie ein Puffern der Hochspannung mit einem primär kapazitiven elektrischen Bauelement und ein Applizieren von Hochspannung über einen Applikator auf Unkraut. Erfindungsgemäß erfolgt dabei ein definiertes Entladen der Hochspannung durch den Applikator, mittels einer Pulsformung über ein pulsformendes Element, welches zwischen dem primär kapazitiv wirkenden Bauelement und einer Elektrode des Applikators angeordnet ist. Dabei kann insbesondere das pulsformende Element z.B. als Funkenstrecke im Applikator, mit welchem das Unkraut behandelt wird, ausgebildet sein und die Hochspannung als Gleichspannung vorliegen.

Ein Verfahren zur umweltfreundlichen Vernichtung von Unkraut oder Begleitwuchs, welche hier auch als zu behandelnde Pflanzen bezeichnet werden, mittels Hochspannungsimpulsen wird dabei durchgeführt mit einem Versorgen einer elektrischen Hochsetzschaltung durch eine Versorgungsspannung von üblicherweise unter 300V, also beispielsweise durch einem Akku, einen Generator oder einen elektrischen Netzanschluss. Mit einem Hochsetzen der Versorgungsspannung durch die Hochsetzschaltung wird eine Hochspannung von mehr als 1 kV erzeugt, beispielsweise eine Hochspannung in einem Bereich von etwa 10 kV bis 40 kV. Erfindungsgemäß erfolgt ein Bereitstellen von Hochspannungsimpulsen aus der Hochspannung, welches mit einem kapazitiven Zwischenpuffern der Hochspannung mit einem primär kapazitiven elektrischen Bauelement und einen anschließenden Pulsformen mit einem Pulsformer erfolgt. Mit dem Pulsformen wird ein definiertes Entladen der Hochspannung mit einer definierten Mindestspannung und Pulscharakteristik. Es folgt dann ein Applizieren mit einem Entladen der pulsgeformten Hochspannungsimpulse in die zu behandelnde Pflanze über eine Hochspannungs-Elektrode eines entsprechenden Applikators. Dieses erfolgt derart, dass eine unmittelbare Schädigung der Zellen der zu behandelnden Pflanze eintritt, bei welcher durch die Hochspannungsentladungen eine Zellschädigung herbeigeführt wird, sodass der Stoffwechsel der zu behandelnden Pflanze zum Erliegen kommt und diese infolge abstirbt. Dieses Verfahren, welches zu einer Schädigung der zu behandelnde Pflanze führt, ist dabei umweltschonend und energiesparend und vermeidet Kollateralschäden weitestgehend. Es ist biologisch verträglich und führt durch die, im vergleich mit einem natürlichen Blitzschlag weit geringere Energie, zu keinen Folgeschäden für die Umwelt, welche über die kurze, lokal auf die zu behandelnde Pflanze beschränkte Hochspannungsentladung hinausgehen.

In anderen Worten betrifft die Erfindung eine Methode zur Bekämpfung von unerwünschtem Pflanzenwuchs mit dem oben genannten Verfahren, bei welchem eine Ausführungsform eines hier beschriebenen Geräts angewandt wird.

Das erfindungsgemäße Verfahren und die erfindungsgemäße Vorrichtung werden nachfolgend anhand von, in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:
- Fig. 1: ein Blockdiagramm einer Ausführungsform eines erfindungsgemäßen Geräts bzw. Verfahrens;
- Fig. 2: eine Block-Schema einer Ausführungsform einer elektrischen Schaltung eines erfindungsgemäßen Geräts;
- Fig. 3a, Fig. 3b und Fig. 3c: eine erste, zweite und dritte beispielhafte Ausführungsform eines erfindungsgemäßen Pulsformers;
- Fig. 3d: eine beispielhaftes Flussdiagramm eines erfindungsgemäßen Bekämpfungsverfahren;
- Fig. 4a und Fig. 4b: eine Darstellung einer beispielhaften erfindungsgemäßen Ausführungsform eines handhaltbaren Geräts;
- Fig. 5a, Fig. 5b und Fig. 5c: eine beispielhafte Ausführungsform eines erfindungsgemäßen tragbaren Basisgeräts;
- Fig. 6a, Fig. 6b und Fig. 6c: Ausführungsformen eines Beispiels einer erfindungsgemäßen Unkrautbekämpfung mit einem beispielhaften ersten Applikator;
- Fig. 7a und Fig. 7b: Ausführungsformen eines Beispiels einer erfindungsgemäßen Unkrautbekämpfung mit einem beispielhaften zweiten und dritten Applikator;
- Fig. 8a, Fig. 8b und Fig. 8c: Ausführungsformen eines Beispiels einer erfindungsgemäßen Unkrautbekämpfung mit einem Rücken-Basisgerät und einem beispielhaften vierten Applikator;
- Fig. 9a und Fig. 9b: Ausführungsformen eines Beispiels einer erfindungsgemäßen Unkrautbekämpfung mit einem beispielhaften fünften Applikator;
- Fig. 10a und Fig. 10b: Ausführungsformen eines Beispiels einer erfindungsgemäßen Unkrautbekämpfung mit einem beispielhaften sechsten Applikator;
- Fig. 11a und Fig. 11b: Ausführungsformen eines Beispiels einer erfindungsgemäßen Unkrautbekämpfung mit einem beispielhaften siebten Applikator;
- Fig. 12a und Fig. 12b: Ausführungsformen eines Beispiels einer erfindungsgemäßen Unkrautbekämpfung mit einem beispielhaften achten Applikator;
- Fig. 13a, Fig. 13b und Fig. 13c: Ausführungsformen eines Beispiels einer erfindungsgemäßen Unkrautbekämpfung mit einem fahrbaren Basisgerät und einem beispielhaften neunten Applikator, welcher mit einer Schneide ausgebildet ist;
- Fig. 14a und Fig. 14b: Ausführungsformen eines ersten Beispiels einer erfindungsgemäßen Unkrautbekämpfung mit einem als Anbaugerät ausgebildeten Basisgerät und einem Applikator für Flächen;
- Fig. 15a und Fig. 15b: Ausführungsformen eines zweiten Beispiels einer erfindungsgemäßen Unkrautbekämpfung mit einem als Anbaugerät ausgebildeten Basisgerät und einem Applikator für Nutzpflanzenbeete.

Die Darstellungen in den Figuren dienen lediglich zur Illustration und sind, sofern nicht explizit angegeben, nicht als exakt maßstäblich zu betrachten. Gleiche oder funktionell ähnliche Merkmale sind, insoweit praktikabel, durchgängig mit denselben Bezugszeichen versehen und werden gegebenenfalls mit einem Buchstaben als Index unterschieden. Die dargestellten Schemata zeigen jeweils die technische Grundstruktur, welche von einem Fachmann entsprechend allgemeinen Grundsätzen ergänzt oder modifiziert werden können.

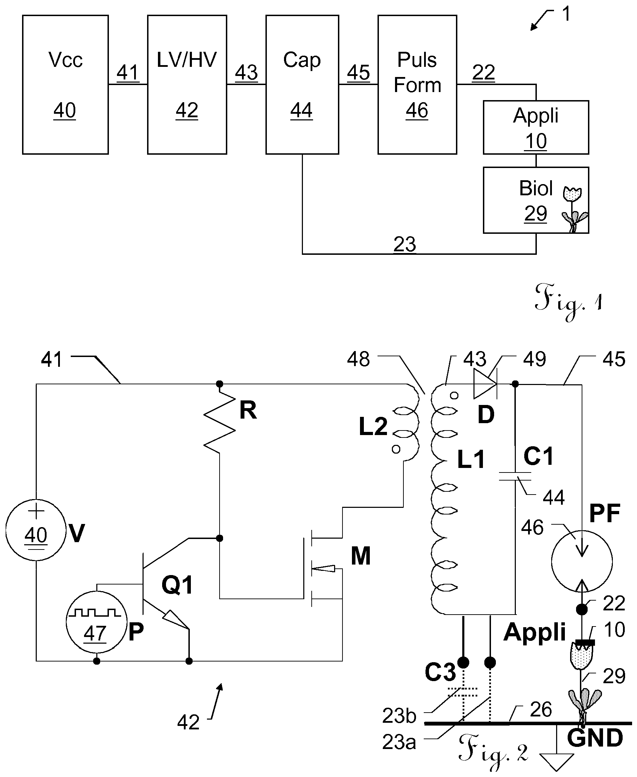

**Fig. 1** zeigt ein mögliches Beispiel einer Ausführungsform einer erfindungsgemäßen Lösung zur Bekämpfung von unerwünschtem Pflanzenwuchs in einem Blockdiagramm.

Versuche haben gezeigt, dass mit dem erfindungsgemässen Ansatz mit kurzen, starken elektrischen Impulsen, Unkraut endgültig und dauerhaft vernichtet werden kann. Je nach Art, Wachstumsphase und/oder Alter der Pflanze, sowie den zur Zeit der Behandlung vorherrschenden Umgebungsbedingungen (Bodenart, Belagsumgebung, Boden- bzw. Wurzelfeuchte etc.) zeigen behandelte Pflanzen unmittelbar nach der Behandlung, durch Verfärbung der Blätter oder schnell eintretender Welke, Anzeichen einer Schädigung. Es ist aber bei manchen Konstellationen auch möglich, dass Stunden oder Tage vergehen bis eine Schädigung äusserlich sichtbar wird. Auch wurde gelegentlich beobachtet, dass nach einer ersten Welke nochmals ein Wachstumsschub eintrat, dann aber behandelte Pflanzen zerfielen.

Bei hartnäckigen Beständen bzw. Pflanzenarten (beobachtet z.B. roter Sauerklee, Ackerwinden oder Schachtelhalm) kann es auch angebracht sein, dass bei einem Anteil der behandelten Unkräuter mehrere Behandlungen notwendig sind, bis eine endgültige und dauerhafte Vernichtung eintritt.

Erfindungsgemäß wird dabei, ausgehend von einer Spannungsversorgung 40 eine Hochspannung generiert. Die Spannungsversorgung 40 liegt dabei im Kleinspannungsbereich oder Niederspannungsbereich von weniger als 1 kV oder deutlich darunter, also z.B. eine Batteriespannung oder Netzspannung. Vorzugsweise kann als Spannungsversorgung 40 z.B. ein Batterie- oder ein Akkumulator-Paket, ein Anschluss an ein Bordnetz eines Fahrzeugs, ein elektrischer Generator oder Solarzellen, optional aber auch ein Anschluss an ein elektrisches Versorgungsnetz von z.B. 110V oder 240V, eingesetzt werden. Für viele Anwendungsfälle ist das erfindungsgemässe Gerät vorzugsweise in einer tragbaren Ausführungsform ausgebildet, bei welcher Akkumulatoren bzw. aufladbare Batterien im Kleinspannungsbereich als Spannungsversorgung 40 eingesetzt werden.

Die dabei, allenfalls über einen Sicherheits- und/oder Hauptschalter, bereitgestellte Versorgungsspannung 41 wird infolge mit einer elektrischen Hochsetzschaltung 42 in eine Hochspannung von größer 1 kV umgesetzt, insbesondere z.B. in eine Hochspannung 43 in einem Bereich von ca. 10kV bis 40kV. Die Hochsetzschaltung 42 kann dabei in unterschiedlichen Ausführungsformen ausgebildet sein, beispielsweise mit zumindest einem von einer Speicherdrossel, speziell z.B. in einer Flyback-Konfiguration, einem magnetischen Übertrager, speziell einem Hochsetztransformator, einer Ladungspumpe, einem Piezo-Effekt-Element, einem Bandgenerator und/oder einem Tesla-Transformator, deren elektrotechnische Ausführungen bekannt sind. Dabei hat diese Hochsetzschaltung 42 entsprechend der vorliegenden Erfindung, insbesondere für ein tragbares Gerät nicht für eine hohe elektrische Leistung im Kilowattbereich ausgelegt zu sein, sondern eine elektrische Leistung kleiner 100W, speziell z.B. zwischen 10W und 30W ist erfindungsgemäß ausreichend. Im Gegensatz dazu schlägt manches bekannte Dokument elektrische Leistungen im Kilowattbereich vor - wohingegen, wie im folgenden erläutert, derartig hohe Leistungen erfindungsgemäß nicht erforderlich sind, speziell nicht für ein tragbares Gerät mit Behandlungsflächen in einer Größenordnung von einigen Quadratzentimetern oder Quadratdezimetern oder zur selektiven Behandlung von Einzelpflanzen. Beispielsweise konnte mit einem Versuchsgerät nachgewiesen werden, das eine Eingangsleistung < 20 Watt genügend ist, um mit einer kurzen Behandlungszeit von einigen Sekunden eine Pflanze wie z.B. Löwenzahn zu vernichten. Neben der bei dieser geringen Geräteleistung erzielbaren kompakten Bauform, kann damit auch eine hinreichende Betriebsdauer im Akkubetrieb erzielt werden. Dabei ist auch zu bemerken, dass somit bei einer erfindungsgemäßen Behandlung auch die Umgebung, Erdreich, Steinplatten, Mauern usw. keine Schädigung erfahren.

Neben batteriebetriebenen, preisgünstigen und vielseitig anwendbaren tragbaren Ausführungen, lassen sich mit der vorliegenden Erfindung auch problemlos grössere Geräte, wie z.B. Anbaugeräte für Landmaschinen, geeignet zum Einsatz auf grösseren Unkrautflächen, realisieren, wobei erfindungsgemäß vorzugsweise mehrere parallele Kanäle von geringer Leistung (z.B. unter 100W oder weniger) angewandt werden. Die hier gezeigten Basisausführungen können also für weitere Gerätschaften vergrössert, mehrfach geschaltet und/oder mit auf die Anwendung angepassten Applikatoren sehr spezifisch für verschiedenste Anwendungen oder Pflanzenarten adaptiert werden.

Führt man jedoch nun wie im Stand der Technik die erzeugte Hochspannung 43 direkt der Unkrautpflanze zu, so wird diese wohl etwas geschädigt, erholt sich aber in den meisten Fällen schnell wieder vollständig. Für eine signifikante Schädigung der Pflanze wären dabei sehr langen Einwirkungszeit erforderlich, was einen praktischen Einsatz ausschliesst.

Entsprechend der vorliegenden Erfindung wird die Hochspannung 43 nicht direkt vom Hochspannungsgenerator 42 zu der Pflanze zugeführt, sondern es wird im elektrischen Pfad zur Pflanze einen Pulsformer 46 implementiert. Vorzugsweise wird dieser Pulsformer in direkter örtlicher Nähe zu einer Elektrode 27 des Applikators implementiert, insbesondere direkt im Applikator zusammen der oder den Elektroden 27. Dagegen werden im Stand der Technik allenfalls direkt von der Hochsetzschaltung Hochspannungspakete in Form von gedämpften Schwingungszügen erzeugt und über eine, meist verhältnismässig lange, Kabelverbindung auf eine Unkrautpflanze übertragen, was wie gesagt wohl eine gewisse Schädigung der Pflanze hervorrufen kann, aber deutlich schlechtere und weniger reproduzierbarer Resultate erbringt als die vorliegende Erfindung.

Die bereitgestellte Hochspannung 43 wird dann in einer Kapazität 44 gespeichert. Dabei wird die Kapazität von dem Hochspannungsgenerator 42 aufgeladen, wobei - je nach konkreter elektrischer Ausbildung des Hochspannungsgenerators 42 noch eine explizite Gleichrichtung der Hochspannung 43 mit einem Gleichrichterelement vorgesehen werden kann. Bei der gespeicherten Hochspannung 45 handelt es sich entsprechend um Gleichspannung (DC).

Eine derartige Aufladung der Kapazität muss dabei auch nicht schnell erfolgen - was die Dimensionierung eines erfindungsgemäßen Hochspannungsgenerator 42 erleichtert, und dieser somit insbesondere kleiner und leichter aufgebaut werden kann, beispielsweise mit den zuvorgenannten Leistungsdaten. Beispielsweise kann eine Wiederaufladung der Kapazität bis zur vorgesehenen Entladespannung dabei mit einer maximale Rate der Behandlungen von weniger als 1 Hz, oder einigen Hz zu ca. 400 Hz Dimensioniert werden. Die zur Anwendung gelangende Behandlungsrate ist abhängig von Einflüssen der Anwendung wie auch des Applikators bzw. der Leistungsmerkmale der Elektronik. Bei einer erfindungsgemäßen Ausführungsform als leichtes, von Hand geführtes Gerät kann beispielsweise speziell eine Frequenz in einem Bereich von ca. 2 Hz bis 50 Hz angewandt werden. Mit Ausnahme von Applikatoren an schnell fahrenden Landmaschinen, lassen sich mit einer Erhöhung der Behandlungsfrequenz (z.B. mit mehr als einigen zig Hz) kaum Vorteile in der Behandlungswirkung der Pflanzen im Vergleich zu weniger häufigen, aber dafür intensiveren Behandlungs-Schlägen erzielen - wobei die konkrete Auslegung auch abhängig von der Ausgestaltung des Applikators und/oder allenfalls auch von den zu behandelnden Pflanzen ist.

Auch sind dabei nicht zwingend grosse Energiemengen in der Kapazität zu speichern. Dieses Faktum kann durch entsprechende Auslegung der Schaltung unter anderem auch vorteilhaft bezüglich der Gewährleistung von elektrotechnischen Sicherheitsvorschriften genutzt werden. Damit können beispielsweise geringere Berührungssicherheitserfordernisse bei den Applikatoren angewandt werden, da eine allenfalls vorhandene Energiemenge einem Menschen keine bleibenden Schäden zufügen würde.

Der Kapazitätswert der Kapazität kann dabei also insbesondere derart ausgelegt sein, dass genügend Energie zur hinreichenden Schädigung der zu behandelnden Pflanze gespeichert ist. Vorzugsweise wird dabei der gespeicherte Energiegehalt auch derart bemessen, dass die vom Gerät ausgehende Gefahr minimal ist, speziell bei einer handgehaltenen Ausführung des Geräts.

Beispielsweise also etwa eine Kapazität in der Grössenordnung von z.B. einigen nF bei Spannungen im Bereich von z.B. ca. 5 kV bis 50 kV.

Entsprechend der Erfindung wird dann, der auf Hochspannung aufgeladenen Kondensator über den Pulsformer an der Unkrautpflanze zur Entladung gebracht, sodass hohe, schädigende pulsgeformte Stromspitzen erzeugt werden. Zeitaufwändige Versuche haben dann gezeigt, dass eine bleibende Schädigung der Pflanze speziell dann gegeben ist, wenn die Kondensatorladung über den Pulsformer, also z.B. einer definierten Funkenstrecke als pulsformendes Element, auf die Pflanze einwirkt. Dabei weist die Kondensatorspannung jeweils eine definierte Mindestspannung auf, z.B. bedingt durch den Elektrodenabstand der Funkenstrecke.

In einer Ausführungsform mit einem Pulsformer, welcher als fest vorgeschaltete, definierte Funkenstrecke ausgebildet ist, lassen sich dabei nachweislich gute Resultate zur Unkrautvernichtung erzielen, speziell wenn die Funkentrecke in örtlicher Nähe zur Applikationselektrode angeordnet ist. Es liegt also keine lange Leitungsverbindung zwischen Funkenstrecke und Applikationselektrode vor, z.B. speziell etwa eine Leitungsverbindung von weniger als 50 cm oder weniger als 30 cm oder vorzugsweise auch unter 10 cm. Der erfindungsgemässe Pulsformer ist dabei ein Bestandteil des Geräts oder des Applikators. Speziell kann der erfindungsgemässe Pulsformer im Applikator untergebracht sein, und in seiner Ausformung an dessen spezifische Applikator-Ausformung angepasst sein. Beispielsweise kann in einer erfindungsgemässen Ausformung ein selektiver Gabel- oder Stichel-Applikator einen jeweils spezifisch anders ausgelegten Pulsformer aufweisen, als z.B. ein Flächen-Applikator, wobei beide Typen von Applikatoren an dem selben Basisgerät betrieben werden können. Das Basisgerät kann dabei ohne Modifikationen für unterschiedliche Anwendungen genutzt werden. In anderen Ausführungen kann vom Basisgerät auch eine Umschaltung zwischen unterschiedlichen Applikationsmodi bereitgestellt werden, wobei eine derartige Modus-Umschaltung nicht nur manuell, sondern auch anhand einer automatischen Erkennung des derzeit angebrachten Applikators, erfolgen kann.

Die definierte Funkenstrecke, oder andersartig ausgebildeten Pulsformern im Sinne der vorliegenden Erfindung, können dabei zwei zumindest primäre Funktionen zugeordnet werden.

Zum einen bildet dieser Pulsformer einen spannungsabhängiger Schalter aus, welcher erst beim Erreichen der vom Funkenelektrodenabstand 67 abhängigen Zündspannung leitend wird und dann infolge den Kondensator bei elektrisch angeschlossener Pflanze bis auf einige 100 Volt entlädt, bevor der Funke wieder versiegt und nicht mehr leitend ist, bis die Zündspannung wieder erreicht ist. Damit kann unter anderem sichergestellt werden, dass unabhängig von der Position des Applikators 10 bzw. dessen Elektrode 27, die sich in Berührung mit einer Pflanze 29 oder in unmittelbarer Nähe der Pflanze 29 befindet, bei jeder Behandlung eine Mindestspannung gegeben ist.

Zum anderen entsteht erfindungsgemäss im Pulsformer, also z.B. im Funkenkreis, ein breites Frequenzspektrum. Das spezifische Frequenzspektrum wird dabei unter anderem durch die Kapazität und Induktivität im Kondensator und den Zuleitungen bestimmt. Versuche habe bestätigt, dass bezüglich der Pflanzenschädigung mit reiner DC-Bestromung oder mit Hochspannungen mit einzelnen spezifische Frequenzen, sich deutlich geringere Schädigungen ergeben. Speziell lässt sich erfindungsgemäss auch eine allgemeine Anwendbarkeit für eine breite Palette von Pflanzen und Untergründen erzielen. Auch erzielt man mit den erfindungsgemäss im Funkenkreis entstehenden Hochfrequenzimpulsen eine kapazitive Ankoppelbarkeit des Hochspannungsgenerators auf den Pflanzenboden. Somit kann das erfindungsgemässe Verfahren in einer Ausführungsform eines Gerätes alternativ zu einer direkten Erdverbindung eines der Pole der Hochspannung auch rein oder zumindest teilweise kapazitiv an den Pflanzenboden angekoppelt sein. Es erscheint dabei bei einem Grossteil der getesteten Pflanzen unwesentlich, welche elektrische Polung die Applikationselektroden bzw. die Erdverbindung aufweisen, was sich z.B. wiederum zumindest teilweise auch auf den Einfluss der, mit dem erfindungsgemässen Pulsformer entstehenden, Hochfrequenzanteile bei der Schädigungswirkung zurückführen lässt.

In einem beispielhaften Modell zur Erläuterung der Schädigungswirkung kann etwa angenommen werden, dass in den erfindungsgemäss behandelten Pflanzen die Zellstruktur geschädigt wird. Speziell erscheint dabei die Zellstruktur dermassen geschädigt zu werden, dass die behandelten Pflanzen die Stoffwechselfunktion der Vakuolen verlieren oder diese zumindest eingeschränkt werden. Dass eine derartige Veränderung eintritt, kann z.B. durch eine einfache Messung des elektrischen Widerstandes der Pflanze untersucht werden. Versuche haben dabei gezeigt, dass ein behandelter und ein unbehandelter Pflanzenteil jeweils einen erheblich veränderten elektrischen Widerstand aufweisen.

Falls sich im Stand der Technik ein Funken ausbildet, so tritt dieser allenfalls direkt zwischen einer Hochspannungsapplikationselektrode und der Pflanze auf, und ist dabei rein willkürlich und weder definiert noch reproduzierbar - und nicht eine definierte Pulsformung im Gerät oder Applikator wie in der vorliegenden Erfindung. Auch ist ein allfällig auftretender, unbeabsichtigter und prinzipiell wegen des Kontaktabbrands unerwünschter Schaltlichtbogen beim Öffnen eines Unterbrecherschalters kein definierter Pulsformer im Sinne der vorliegenden Erfindung, speziell auch wenn ein solcher zudem nicht örtlicher Nähe beim Applikator, sondern im Gerät örtlich einer Zündspule zugeordnet wäre.

Die Wirkung einer erfindungsgemässen Behandlung bleibt dabei primär auf den unmittelbaren Bereich der Entladung beschränkt. Sind somit spezifische Applikatoren für Einzelpflanzen ausführbar, mit welchen selektiv einzelne unerwünschte Pflanzen zwischen erwünschten Nutzpflanzen behandelt werden können, ohne dabei die Nutzpflanzen wesentlich zu schädigen. Alternativ sind aber auch Flächen-Applikatoren mit entsprechender flächigen Ausgestaltung ausführbar, mit welchen auch grossflächige Behandlungen von Flächen, Plätzen, Wegen oder Treppen durchführbar sind. Einige Beispiele sind weiter unten aufgelistet.

**Fig. 2** zeigt eine weitere beispielhafte Ausführungsform eines erfindungsgemäßen Geräts in einem abstrahierten Elektro-Schema. Abstrahiert ist hierbei im Sinne eines vereinfachten Prinzipschaltbilds, welches nun einen Ausschnitt einer beispielhaften Ausführungsform einer erfindungsgemäßen Schaltung 99 illustriert, welche in einem erfindungsgemäßen Gerät 1 angewandt werden kann.

Darin wird eine elektrische Energieversorgung 40, < 1 kV wie z.B. eine Batterie, über eine elektrische Hochsetzschaltung 42 in eine Hochspannung 43, > 1 kV umgewandelt. Hier beispielsweise angedeutet ist eine Flyback-Konfiguration, bei welcher ein magnetischer Übertrager 48 als Speichertransformator eingesetzt wird, welcher mit einer entsprechenden, hier nur symbolisch dargestellten Schaltung 42 mit einem Pulsgenerator 47 angesteuert wird. Wie bereits erwähnt sind aber auch andere elektrische Schaltungen zur Erzeugung einer Hochspannung aus einer Kleinspannung als Hochsetzschaltung in einem erfindungsgemäßen Gerät anwendbar, insbesondere die hier schon erwähnten Schaltungsprinzipien. Über eine Diode D 49 wird die Hochspannung 43 in einem kapazitiv wirkenden Element 44 zwischengepuffert.

Zur Behandlung der Pflanze 29 wird ein Pol der gespeicherten Hochspannung 45 mit dem Erdreich bzw. Untergrund 26 der Pflanze 29 elektrisch gekoppelt. Dieses Koppeln kann konduktiv, kapazitiv oder in einer kapazitivkonduktiven Mischform erfolgen, was durch die beiden Erdanschlüsse 23a und 23b symbolisiert ist.

Die Hochspannung 45 wird über einen Pulsformer 46 mit einer oder mehreren Elektroden eines Applikators 10 der Pflanze zugeführt. Der Pulsformer ist dabei insbesondere derart ausgebildet, dass dieser erst ab einer gewissen Mindestspannung der Hochspannung 45 leitfähig wird, sodass immer eine gewisse Mindestspannung bei der Behandlung erzielt wird. Die Hochspannung 45 aus dem Kondensator 44 wird dabei in schädigender Weise über die Pflanzen und deren Wurzelwerk hin zu dem mit dem Gegenpol 22 verbundenen Erdboden 26 entladen. Dabei tritt vorzugsweise keine gänzliche Entladung des Kondensators auf. Die Hochsetzuschaltung 42 kann dabei also insbesondere derart ausgelegt sein, dass deren Spitzenleistung oder Durchschnittsleistung geringer ist als jene Leistung, welche in einem Behandlungspuls einer Entladung enthalten ist. Es wird also nach einer Entladung eine gewisse Zeitdauer in Anspruch nehmen, um den Kondensator erneut wieder auf die Mindestspannung aufzuladen, sodass ein Behandlungspuls abgegeben werden kann.

Vorzugsweise ist der Pulsformer 26 auch derart ausgebildet, dass dieser bei Erreichen der Mindestspannung einen kurzen und starken elektrischen Puls mit einem breitbandigen Frequenzspektrum abgibt. Damit kann z.B. auch eine zumindest teilweise kapazitive Kopplung zwischen der Elektrode des Applikators 10 und der Pflanze, sowie zwischen der Erdungselektrode 23 und dem Erdboden 26 erfolgen, ohne dass dabei die Wirkung massiv beeinträchtigt ist. Der Pulsformer 46 ist dabei vorzugsweise in örtlicher Nähe zur Applikationselektrode 27 des Applikators 10 angeordnet, was unter anderem eine Ausbildung darstellt, welche eine gute Übertragung des breitbandigen Spektrums bewirkt, speziell auch, da hiermit eine Dämpfung von Frequenzanteilen durch eine lange Leitungsverbindung vermieden wird.

Der Pulsformer 46 kann dabei als ein mit oben beschriebenen Charakteristiken ausgelegtes Halbleiterelement ausgebildet sein. Speziell kann dabei z.B. auch das Prinzip des Lawinendurchbruchs genutzt werden.

Der Pulsformer 46 kann dabei alternativ auch als definierte Funkenstrecke ausgebildet sein, welche explizit zu diesem Zwecke zwischen dem Kondensator 44 als Hochspannungsspeicher und einer Elektrode des Applikators 10 ausgebildet und angeordnet ist.

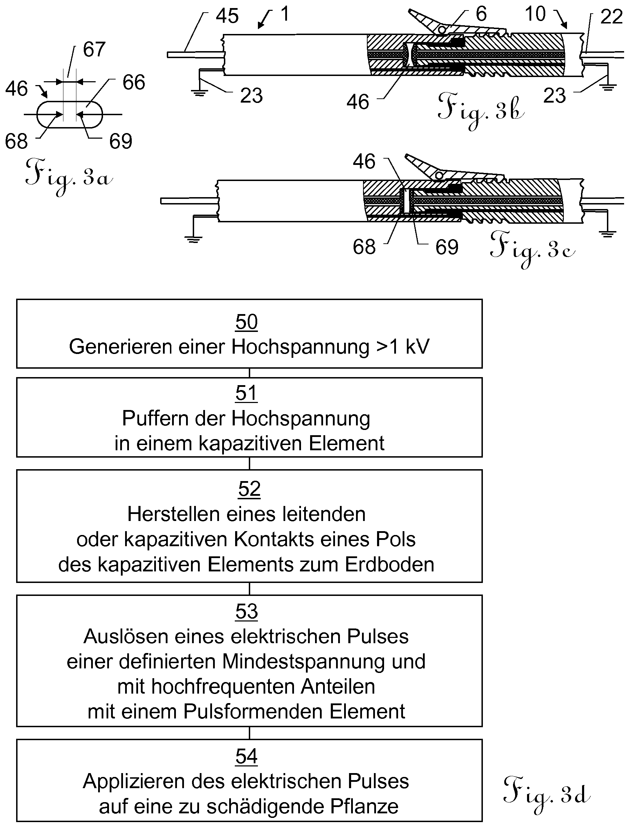

Die Funkenstrecke (z.B. wie schematisch dargestellt in Fig. 3a) kann dabei mit zumindest zwei Elektroden 68,69 in einem definierten Abstand zueinander ausgebildet sein. Die Funkenstrecke 46 kann dabei in unterschiedlichsten geometrischen Formen und Materialien der Elektroden 68,69 ausgebildet sein. Damit lassen sich Parameter der resultierenden Hochspannungspulse bei einer Behandlung variieren. Beispielsweise kann je eine oder beide der Elektroden 68,69 der Funkenstrecke 46 als Spitze, Kugel, Platte, etc. ausgebildet sein. Die Funkenstrecke 46 kann auch als einfache oder kaskadierte Funkenstrecke ausgebildet sein. Auch kann eine entsprechende Löscheinrichtung für den Funken vorhanden sein. Derartige Parameter der Funkenstrecke können dabei insbesondere jeweils auf den konkreten Applikator und/oder Anwendungsfall angepasst werden, und speziell auch durch Versuchsreihen optimiert werden, da eine Modellierung der effektiven Schädigungswirkung an der Pflanze sich nicht trivial gestaltet. Dies ist neben der erwähnten örtlichen Nähe zur Applikationsstelle ein weiterer Anreiz für eine Ausführungsform bei welcher eine definierte Funkenstrecke im - vorzugsweise austauschbaren - Applikator 10 angeordnet ist.

In einer Ausführungsform kann die Funkenstrecke 46 dabei mit zwei in definiertem Elektrodenabstand mechanisch fixierten Elektroden in einer Umgebungsluftatmosphäre ausgebildet sein. Dabei kann speziell auch für eine hinreichende passive oder aktive Belüftung der Funkenstrecke, insbesondere des Elektrodenzwischenraumes, gesorgt werden, insbesondere wobei dennoch ein hinreichender Berührungsschutz der Hochspannungsteile sichergestellt sein sollte. In einer anderen Ausführungsform kann die Funkenstrecke 46 auch hermetisch abgeschlossen und von einem definierten Gasmedium umgeben sein. Neben Luft können hierbei auch andere Gase oder Edelgase unter vorgegebenen Gasunterdrücken oder Gasüberdrücken genutzt werden. Neben einem Einfluss auf die resultierende Pulsform kann bei einem derartigen hermetischen Abschluss auch eine Unabhängigkeit von Umgebungsbedingungen wie Luftfeuchtigkeit, Luftdruck, etc. als Vorteil genannt werden.

Als weitere konkrete Beispiele von speziellen Ausführungsformen eines Pulsformers 46 können beispielsweise genannt werden: Eine Ausführung einer sich in einem Gasmedium befindlichen Funkenstrecke mit metallischen Spitzen oder auch flächigen Platten als Elektroden; eine Löschfunkenstrecke mit einer Aufspaltung des Schaltlichtbogens auf mehrstufige Teillichtbögen; eine Gleitfunkenstrecke; ein Gasentladungsschalter; ein Halbleiterschalter; etc.

Als eine andere spezielle Ausführungsform einer Funkenstrecke kann auch eine mechanische Funkenstrecke implementiert werden, deren Abstand im Zyklus der gewünschten Entladungen rotiert und so der Abstand 67 zwischen den Elektroden 68,69 dermaßen verändert wird, dass die Zündspannung veränderbar sind bzw. die Pulsfrequenz der Zündungen damit beeinflussbar sind. In einer weiteren speziellen Ausführungsform der Funkenstrecke 46 kann - alternativ zu einer einfachen und unsteuerbar fix vordefinierten Funkenstrecke 46 - auch ein Trigatron als Beispiel eines steuerbaren Pulsformers 46 angewandt werden. Dabei können speziell auch die elektrischen Parameter der Hochspannungsentladung im Betrieb einstellbar gestaltet werden, beispielsweise in Form von unterschiedlichen Modi für unterschiedliche Applikatoren, Unkräuter, Umgebungsbedingungen, etc.

Der Hochspannungs-Kondensator 44 ist dabei in Form einer hochspannungsfesten, elektrotechnischen Anordnung ausgebildet, welche eine primär kapazitive Wirkung aufweist, beispielsweise etwa als reguläres Standardbauteil oder auch als dem Gerät 1 angepasste Spezialausführung.

**Fig. 3a** zeigt ein erstes schematisches Beispiel einer Ausführungsform eines Pulsformers 46 entsprechend der vorliegenden Erfindung. Die definierte Mindestspannung hängt dabei primär von dem, je nach Ausführungsform beispielsweise durch Umgebungsluft oder durch ein definiertes Gas gebildetes, Medium 66 und die Funkenstreckenlänge 67 ab. Insbesondere die Funkenstreckenlänge 67 kann dabei Variierbar ausgestaltet sein, speziell für Unterschiedlich angepasst auf den jeweiligen Applikator 10.

**Fig. 3b** zeigt ein zweites Beispiel einer Ausführungsform eines Pulsformers 46 entsprechend der vorliegenden Erfindung, welcher in der gezeigten, beispielhaften Ausführungsform eines lösbaren Kopplungselements 6 zwischen dem Basisgerät 1 und dem Applikator 10 integriert ausgebildet ist. In einer Variante dieser Ausführungsform kann die Funkenstreckenlänge 67 dabei variierbar ausgestaltet sein, beispielsweise jeweils fix, aber Unterschiedlich angepasst auf den jeweiligen Applikator 10 und/oder auch variabel für den selben Applikator, etwa mit einem Verstellmechanismus für die Funkenstreckenlänge 67 über eine Gewindespindel, einen Rastmechanismus, etc. Die beiden Elektroden 68 und 69 der Funkenstrecke 46 oder die gesamte Funkenstrecke 46 können dabei auswechselbar ausgestaltet sein, z.B. weil diese durch die Funkenentladungen abgenutzt werden können oder weil die Entlade-Charakteristik verändert werden soll.

**Fig. 3c** zeigt ein drittes Beispiel einer Ausführungsform eines Pulsformers 46 ähnlich zu Fig. 3b, bei welchem die Elektrode 68 und die Elektrode 69 der Funkenstrecke 46 sowie der Abstand 67 zwischen diesen Elektroden 68 und 69 anders ausgebildet sind, womit die Pulsformungs-Charakteristik unterschiedlich ausgebildet und angepasst werden kann.

**Fig. 3d** zeigt ein vereinfachtes Flussdiagramm eines Beispiels einer Ausführungsform der vorliegenden Erfindung.

In Block 50 erfolgt ein Generieren einer Hochspannung >1 kV, was beispielsweise aus einer Kleinspannungsbatterie kleiner 50 V und mit einer Druckschnittsleistung von einigen zig Watt erfolgen kann.

In Block 51 erfolgt ein Puffern dieser Hochspannung in einem kapazitiven Element, beispielsweise mit einem Energiegehalt von ca. 1 bis 10 Joule für ein handgeführtes Gerät mit einem Kapazitätswert im nF Bereich.

Block 52 beschreibt ein Herstellen eines leitenden oder kapazitiven Kontakts eines Pols des kapazitiven Elements zum Erdboden, wobei dies für mehrere Behandlungen meist nur einmal zu erfolgen hat.

In Block 53 wird nun beschrieben wie bei Annähern eines Applikators 10 an eine Pflanze ein Auslösen eines elektrischen Pulses einer definierten Mindestspannung und mit hochfrequenten Anteilen mittels einem pulsformenden Element erfolgt.

Dies bewirkt das in Block 54 genannte Applizieren des elektrischen Pulses auf eine zu schädigende Pflanze.

Dieser Vorgang kann mehrfach für eine oder mehrere zu bekämpfende Pflanzen wiederholt werden.

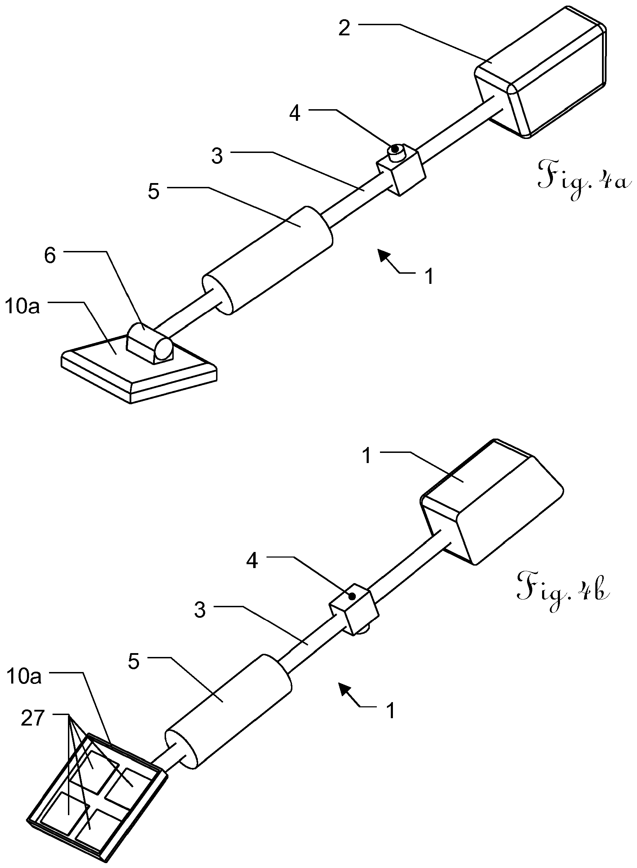

**Fig. 4a** und **Fig. 4b** zeigen schematisch ein Beispiel einer Ausführungsform eines Geräts 1 zur Unkrautbekämpfung entsprechend der Erfindung. Im Gehäuse 2 sind dabei insbesondere die Energieversorgung und die Hochspannungserzeugung untergebracht, welche über das Bedienelement 4 gesteuert werden kann. Um eine angenehme Behandlung von am Boden wachsenden, unerwünschten Pflanzen durch einen stehenden/gehenden Menschen zu ermöglichen, ist eine stabartige Verlängerung 3 ausgebildet, an derem unteren Ende sich über eine Kopplung 6 ein Applikator 10a befindet, über welchen die Hochspannung auf die unerwünschten Pflanzen zur Einwirkung gebracht wird. Hier speziell gezeigt ist ein kapazitives Element 5 zur Speicherung der Hochspannung. Nicht explizit gezeigt ist hingegen der Pulsformer, welcher wie erwähnt vorzugsweise in örtlicher Nähe zum oder am Applikator 10 angeordnet ist. Fig. 4b zeigt nochmals eine andere Ansicht, bei welcher mehrere Applikator-Elektroden 27 am Applikator dargestellt sind, welche im Betrieb parallel oder individuell erfindungsgemäß über Pulsformer mit der Hochspannung beaufschlagbar sind.

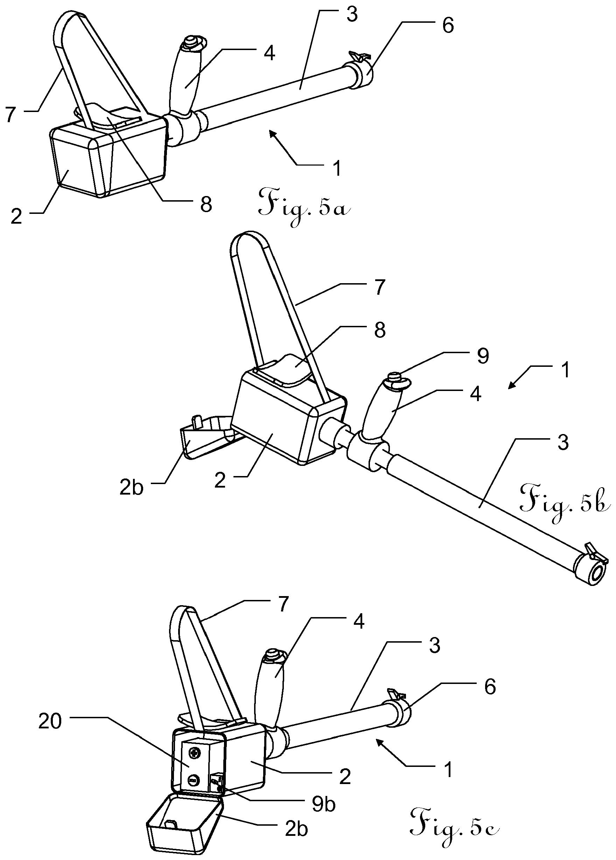

**Fig. 5a** illustriert eine beispielhafte Ausführungsform eines erfindungsgemäßen Gerät 1 in Form eines handhaltbaren Basisgeräts, an welchem hier nicht gezeigte, austauschbare Applikatoren 10 anbringbar sind. Die gezeigte Ausführungsform verfügt über einen Schulter-Trageriemen 7 sowie eine Armablage 8, mittels welchen - wie im Folgenden gezeigt - ein Benutzer 30 das Gerät 1 mobil einsetzten kann. Das Gehäuse 2 kann dabei insbesondere bezüglich einer für den Benutzer 30 optimalen Schwerpunktlage des Geräts 1 mit dem Trageriemen 7 verbunden sein. Der Tragegurt 7 kann dabei über die Schulter getragen werden, sodass das Gerät 1 einhändig geführt werden kann, wofür die dargestellte Ausführungsform des Geräts 1 einen Handgriff 4 aufweist.

Das Kopplungsstück 6 weist eine Klemm- oder Verschlussvorrichtung auf, mit welcher, vorzugsweise in austauschbarer Weise, Applikatoren 10 mechanisch und elektrisch mit dem Basisgerät verbindbar sind. Der Verschluss des Kopplungsstücks 6 ist dabei dermassen ausgestaltet, dass ein Applikator 10 sicher mechanisch angeflanscht werden kann und zudem sichergestellt wird, dass eine elektrische Verbindung zwischen Basisgerät 1 und Applikator 10 auch von einem Laien sicher vorgenommen werden kann. Mit Betätigung des Verschlusses 6 können auch Sicherheitsfunktionen bereitgestellt werden, speziell eine geräteinterne Hochspannung abgeschaltet, entladen und/oder kurzgeschlossen werden. Eine Kopplung kann dabei speziell auch mit einer Anschluss-Codierung von unterschiedlichen Applikatoren 10 erfolgen, speziell z.B. für einpolige oder mehrpolige Applikatoren 10 oder für Applikatoren 10 mit unterschiedlichen Strom/Spannungserfordernissen.

Mit der Verlängerung 3 kann der Applikator 10, vorzugsweise an den Benutzer 30 und/oder Applikator 10 anpassbar, z.B. in Länge und/oder Ausrichtung verstellbar, in einer vorteilhaften Arbeitsposition angebracht werden. Eine derartige Verlängerung 3 kann beispielsweise auch teleskopartig oder mit austauschbaren, unterschiedlichen Verlängerungsstücken ausgeführt sein. Gehäuse 2 und/oder Verlängerung 3 können dabei auch für Transport oder Lagerung zerlegbar oder zusammenklappbar ausgeführt sein.

**Fig. 5b** zeigt eine andere Ansicht des Beispielgeräts 1 aus Fig. 5a, bei welcher die Bedieneinheit 9 am Handgriff 4 deutlich ersichtlich ist. Ein oder mehrere Bedienelemente der Bedieneinheit 9 können dabei unterschiedliche Funktionen wie z.B. Ein/Aus, Auswahl eines Modus oder einer Intensität der Behandlung, Auswahl einer Applikationsform oder eines Applikator-Typs, etc. bereitstellen. Die Bedieneinheit kann dabei zudem Indikatoren aufweisen z.B. eine oder mehre LEDs, Leuchtanzeigen, Displays, akustisches oder haptisches Feedback, etc. beispielsweise zur Anzeige eines Betriebszustands des Geräts 1, eines Batterieladestatus, etc. Bei den Bedienelementen 9 ist auf hinreichende galvanische Trennung zur Isolation gegenüber der Hochspannung zu achten, beispielsweise mit entsprechenden ausgestalteten nichtleitenden mechanischen Betätigungen oder mit entsprechenden elektronischen Bauelementen.

Das Gehäuse 2 ist hier geöffnet gezeigt. In der Ansicht in **Fig. 5c** sind darin eine Batterie oder ein Akkumulator als Spannungsversorgung 20 gezeigt, sowie ein Hauptschalter 9b. Neben Varianten des Geräts mit auswechselbaren Batterien oder wideraufladbaren Akkumulatoren können andere Ausführungsformen des Geräts auch optional oder zusätzlich mit einem Netzstecker zur Verbindung mit einer externen Spannungsquelle ausgebildet sein, beispielsweise einer Steckdose, einem Generator, einem Fahrzeug, etc. Zudem oder optional kann im Gehäuse 2 auch eine Unterbringung von Zubehör, Werkzeugen, elektrischen Anschlüssen, Anschlusskabeln, Applikatoren 10, etc. vorgesehen sein.

Die hier geöffnet gezeigte Klappe 2b des Gehäuses 2 kann dabei speziell auch die Funktion einer Sicherheitsklappe zukommen, welche beim Öffnen alle elektrischen Komponenten vom Umfeld trennt, etwa um ein unabsichtliches Einschalten zu verhindern. Bei geöffneter Klappe 2b kann dabei z.B. ein Akku 20 eingesetzt werden und ein Hauptschalter 9b eingeschaltete werden. Allerdings wird erst durch Schließen der Klappe 2b eine zusätzliche Sicherung, beispielsweise eine mechanische Sicherung und/oder ein zusätzlicher elektrischer Schalter betätigt, welche eine Erzeugung von Hochspannung freigibt. Nur bei sicher verschlossener Klappe 2b kann durch Betätigen des Drückers 9 am Stick 4 ein Entladung über den entsprechenden Applikator ausgelöst werden. Bei geöffneter Klappe wird die geräteinterne Hochspannung abgeschaltet, entladen und/oder kurzgeschlossen. Somit können Hochspannungsüberschläge auf den Bediener während Manipulationen innerhalb des isolierenden Gehäuses 2 vermieden werden.

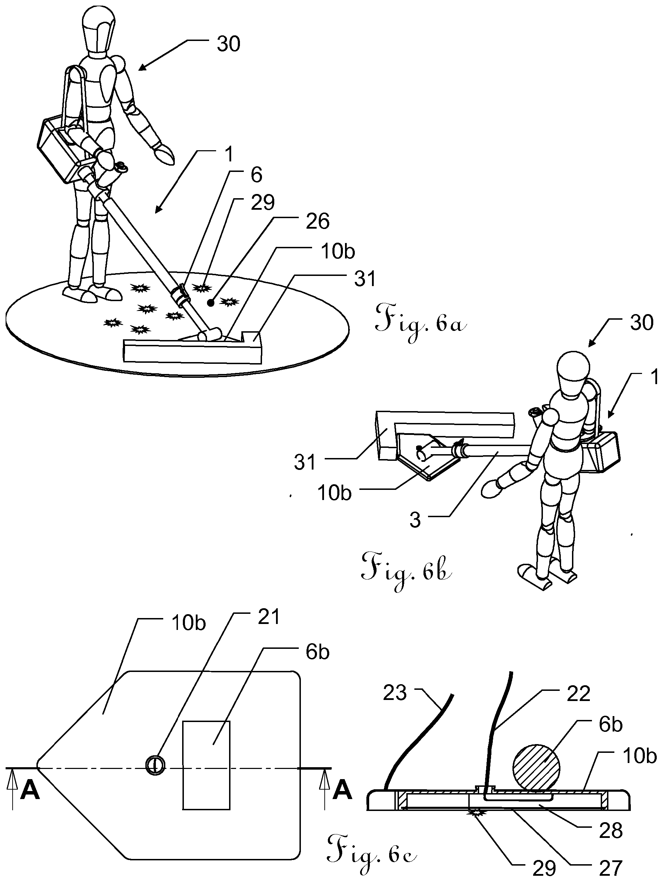

**Fig. 6a** zeigt ein Beispiel einer erfindungsgemäßen Ausführungsform, bei welcher ein menschlicher Bediener 30 ein Basisgerät 1 ähnlich jenem in Fig. 5a, 5b oder 5c mit einer ersten Ausführungsform eines Applikators 10b benutzt.

Wie in **Fig. 6b** nochmals verdeutlicht, ist der mittels des Verschlusses 6 eine Ausführungsform eines ersten Applikators 10b zu einem Unkrautbekämpfungssystem verbunden, welcher Applikator 10b eine flächige Applikation der Hochspannung auf unerwünschten Pflanzenwuchs am Boden 26 bereitstellt, zugleich aber auch einen Einsatz bis in Ecken 31 ermöglicht, um auch in Ecken bei Treppen, Begrenzungen oder Mauern zu gelangen. Beispielhafte Anwendungen sind etwa Gräser, Moose oder andere unerwünschte Pflanzen, welche auf Kies-, Pflaster-, oder Plattenflächen wachsen.

In **Fig. 6c** ist nochmals eine beispielhafte Detailzeichnung eines ersten erfindungsgemäßen Applikators 10b in Grundriss und Schnitt dargestellt. Über ein Gelenk 6b ist der Applikator 10b hin zum Kopplungs-Verschluss 6 an der Verlängerung 3 des Basisgeräts 1 in lösbarer Weise mechanisch verbunden. Mit dem Gelenk 6b kann sich der Applikator 10b jeweils auch an Unebenheiten des Bodens 26 oder an eine schräge Haltung des Geräts 1 anpassen. Neben der mechanischen Verbindung wird dabei auch eine nach außen hin entsprechend hochspannungsisolierte elektrische Verbindung zwischen Gerät 1 und Applikator bereitgestellt. Diese elektrische Verbindung ist hier beispielsweise durch die beiden Anschlussleitungen 22 und 23 von der Kopplung 6 des Geräts 1 zum Applikator 10b dargestellt, welche Anschlussleitungen 22 und/oder 23 aber z.B. auch im Gelenk 6b ausgebildet sein können. Der Anschluss 23 kann dabei z.B. eine Erdverbindung und/oder Abschirmung bereitstellen, während über den Anschluss 22 die Hochspannung bereitgestellt wird. Dabei weist die hier dargestellte Ausführungsform eines ersten Applikators 10b einen Pulsformer 28 zwischen der Hochspannungs-Zuführung 22 und einer Elektrode 27 zum Kontakt mit dem zu schädigenden Pflanzenwuchs 29 auf. Der Applikator 10b und/oder das Gerät 1 kann dabei auch mit einer weiteren Schutzfunktion ausgebildet sein, welche eine Zufuhr von Hochspannung unterbindet, wenn der Applikator 10b nicht am Boden 26 anliegt und/oder sich in einer nicht im wesentlichen horizontalen Lage befindet, beispielsweise in vertikaler oder umgedrehter Stellung.

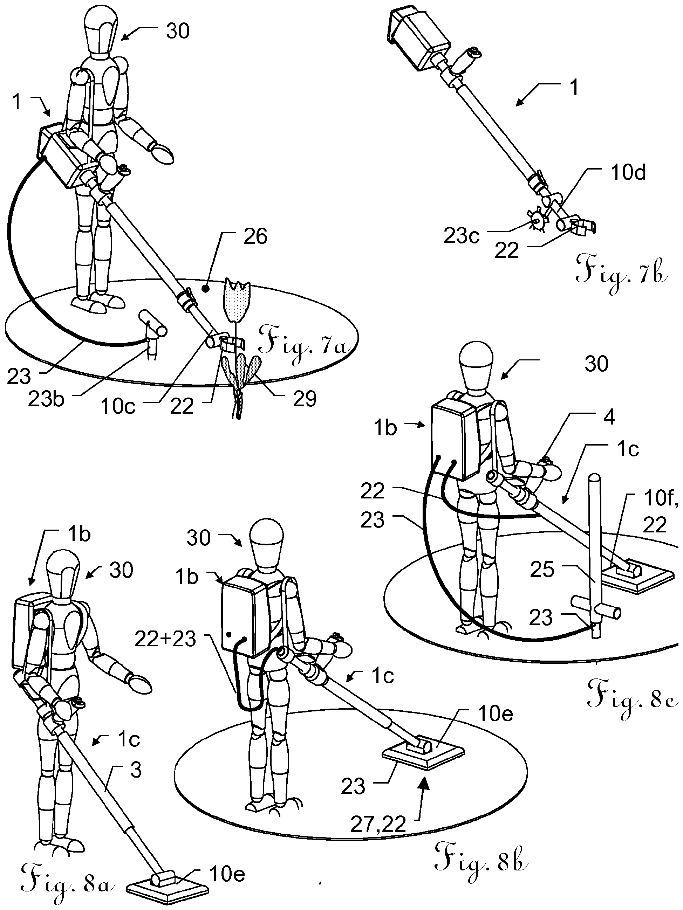

**Fig. 7a** und **Fig. 7b** zeigen eine weitere Darstellung von beispielhaften Ausführungsformen eines erfindungsgemäßen Systems zur Bekämpfung von Schadpflanzen.

Dabei ist in **Fig. 7a** ein zweiter beispielhafter Applikator 10c mechanisch und elektrisch mit einem Basisgerät 1 verbunden, welcher als Greifer 10c ausgebildet ist. Dieser eignet sich besonders zur spezifischen Behandlung einzelner Pflanzen, speziell wenn diese eher von hohem Wuchs sind, beispielsweise einzelne Löwenzahne oder dergleichen. In dieser Ausführungsform wird vom Gerät 1 zum Boden 26 mit einer Anschlussleitung 23 und einem Erdspieß 23b ein direkter elektrischer Kontakt hergestellt, welcher als ein neutraler Pol der Hochspannung dient. Die Anschlussleitung 23 ist hier beispielsweise im Bereich der Klappe 2b des Geräts 1 angeschlossen, dieser Anschluss kann jedoch optional auch anderswo am Gerät 1 ausgebildet sein.

Der gezeigte Greifer für Pflanze kann als teilweise die Pflanze umschießende Elektrode 22 zur Übertragung der Hochspannung auf die Pflanze 29 ausgebildet sein, wobei der Applikator 10c wiederum in örtlicher Nähe zum Greifer den Pulsformer aufweist. Der Greifer kann entweder mit oder ohne Betätigungsmechanismus für ein Öffnen und Schließen der Klauen des Greifers ausgebildet sein. Der Greifer kann wahlweise zusätzlich eine Klinge beinhalten mit derer Hilfe eine Pflanze 29 vor der Hochspannungs-Impulsauslösung vom Stängel getrennt werden kann. Durch die mit diesem Aspekt der Erfindung erfolgende Einbringung der Hochspannung in den saftigen Stängel, kann speziell eine Konzentration der gesamten elektrischen Ladung auf den Wurzelbereich der Pflanze 29 erfolgen, sodass nur wenig vagabundierende Ladung über Stängel und Blattwerk der Pflanze übertragen wird und direkt das Wurzelwerk geschädigt wird.

**Fig. 7b** zeigt ebenfalls eine ähnliche Ausführungsform eines Applikators 10d mit einem Greifer, bei welcher aber kein Erdspieß 23b verwendet wird, sondern bei welcher der Applikator 10d eine integrierte Erdung/Nullung des Anschlusses 23c am Applikator aufweist. Hier gezeigt ist beispielhaft eine elektrisch leitende radartige Vorrichtung, speziell mit leitfähigen Spikes, jedoch kann in anderen Varianten dieser Ausführungsform ein Kontakt mit Erdreich auch durch eine Platte, eine Bürste, einen Zacken, einer Harke, einem Rechen, etc. erfolgen. Generell ist zumeist eine direkte leitende Kontaktierung des Erdbodens 26 mit dem Leiter 23 nicht zwingend erforderlich, sondern auch eine kapazitive Kopplung mit einer entsprechend dimensionierten Fläche hinreichend.

**Fig. 8a** zeigt eine beispielhafte Ausführungsform eines erfindungsgemäßen Systems, bei welchem das Basisgerät 1b nicht wie zuvor als handhaltbares Gerät, sondern als Rückentrageinheit 1b oder Rucksack 1b für den Benutzer 30 ausgebildet ist. Diese ist speziell für umfangreichere Arbeiten leichter und angenehmer zum Tragen. Zudem kann darin ein größerer Akku und/oder leistungsstärkere Elektronik verbaut werden. Weitere, hier nicht explizit illustrierte erfindungsgemäße Basisgeräte können auch als fahrbarer Wagen, Schubkarre, Anhänger, etc. ausgebildes sein, wobei speziell auch deren Rädern und/oder Kufen als ein Erdkontakt der Hochspannung fungieren können.

In der Hand hält der Benutzter 30 lediglich das Handstück 1c mit einer Verlängerung 3 zum Applikator 10e, welcher insbesondere derart ausgebildet sein kann, dass dieser sowohl mit dem Handgerät 1 als auch mit der Rückentrageinheit 1b als Basisgerät kompatibel ist. Vorzugsweise weist das Handstück 1c dabei auch ein Bedienelement 9 auf. Weiters kann das Handstück speziell auch Sicherheitselemente aufweisen, welche z.B. eine sichere Abschaltung der Hochspannung bewirken, wenn der Benutzer 30 das Handstück 1c nicht in seiner Hand hält.

In **Fig. 8b** zeigt eine andere Ansicht einer beispielhaften Ausführungsform der Rückentrageinheit 1b. Bei dieser werden beide elektrischen Anschlüsse der Hochspannung über das Handstück 1c zum Applikator 10e geleitet. Die gezeigte Ausführungsform eines Flächen-Applikators 10e bildet dabei entlang seines Randes eine Erdungs-Elektrode 23 zur Herstellung einer leitenden oder kapazitiven Verbindung mit dem Erdboden und innenliegend davon eine Elektrode 22 zur Kontaktierung des Pflanzenwuchses sowie der zugehörige Pulsformer aus.

**Fig. 8c** zeigt eine beispielhafte Ausführungsform einer erfindungsgemäßen Variante einer beispielhaften Ausführungsform der Rückentrageinheit 1b, bei welcher eine Erdungs-Elektrode 23 über eine separate Leitung hin zu einem Erdungs-Erdspieß 25 genutzt wird, welcher in diesem Beispiel speziell mit Fußrasten zum Einpressen in den Boden 26 und einem langen Stab zum Herausziehen aus dem Boden 26 ausgebildet ist. Dabei kann eine Erdungsverbindung 23 über den Applikator 10f entfallen, kann optional aber auch zusätzlich vorhanden bleiben, sodass die applizierte Hochspannung den jeweiligen Rückweg des geringsten Widerstandes wählt. Alternativ kann auch über die Bedieneinheit 9 eine selektive elektrische oder mechanische Umschaltung zwischen diesen Varianten erfolgen. Die Nutzung eines solchen Erdspießes 25 kann speziell vorteilhaft sein um die Wirkung der Hochspannungspulse zu verstärken oder falls ein Untergrund vorliegt, bei welchem es ansonsten schwierig ist eine Herstellung eines hinreichenden elektrischen Kontakts zum Erdboden 16, in welchem die Pflanzen 29 wachsen, herzustellen. Beispielsweise in einem Steinbeet oder bei schwer leitenden Bodenbelägen wie Steinplatten, etc. kann ein derartiger Erdspieß 25 in der Umgebung der Behandlungsfläche in die Erde gesteckt werden.

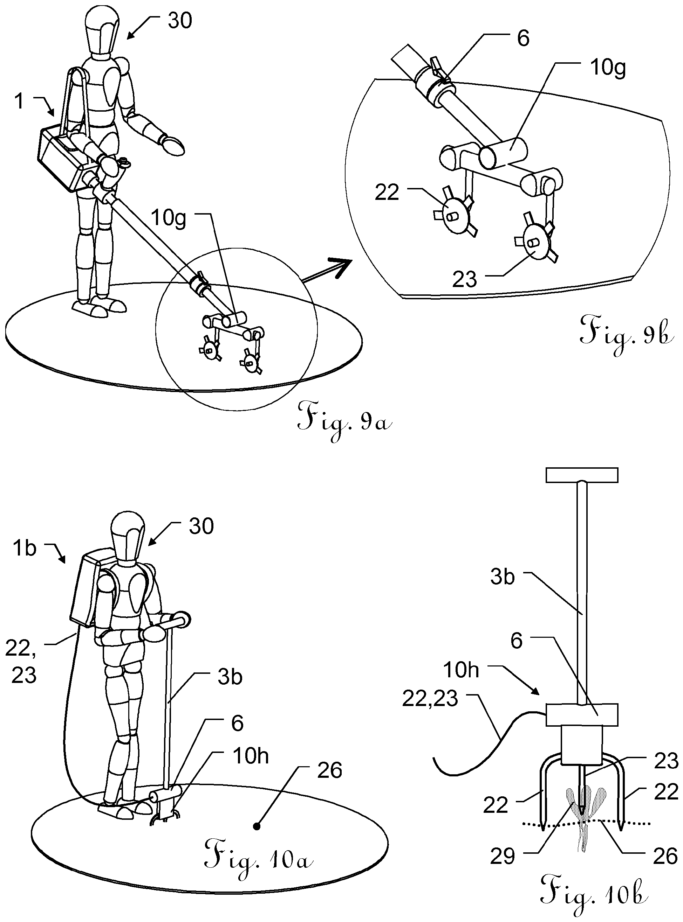

**Fig. 9a** sowie **Fig. 9b** zeigen eine beispielhafte Ausführungsform einer erfindungsgemäßen Variante eines beispielhaften Applikators 10g, bei welchem beide Elektroden 22 und 23 über den Applikator 10g mittels dessen Kopplung 6 zum Basisgerät 1 oder 1b mit der Hochspannung beaufschlagbar sind. Das Basisgerät 1 ist hier als Handgerät gezeigt, die gezeigten Applikatoren 10 lassen sich allgemein jedoch auch an anderen Basisgerät-Varianten nutzen. Die mit dem Pulsformer ausgebildete Hochspannungs-Elektrode 22 ist dabei als ein erstes drehbares Radteil ausgebildet und ein zweites drehbares Radteil, vorzugsweise das hintere, bildet den zugehörigen Gegenpol 22, welcher die Erdverbindung herstellt. Zumindest eine der Elektroden 22 und/oder 23 für die Hochspannung ist dabei also radförmig ausgebildet.

**Fig. 10a** zeigt eine beispielhafte Ausführungsform einer erfindungsgemäßen Variante eines beispielhaften Applikators 10h, bei welcher eine Rückentrageeinheit 1 als Basisgerät ausgebildet ist, welches mit über eine Hochspannungs-Kabelverbindung 22,23 mit einem als Handvorsatz mit Elektroden ausgebildeten Applikator 10h verbunden ist. Zur Anwendung sticht der Benutzer 30 den gabelförmigen Applikator 10h mittels dessen Handgriffs 3b in den Erdboden 26 bei der zu vernichtenden Pflanze.

Der in **Fig. 10b** nochmals im Detail dargestellte Applikator 10h weist neben dem Griff 3b und dem Kopplungsstück 6, über welches die elektrische Energie über das Kabel 22,23 zugeführt wird, einen gabelförmigen Applikationsbereich auf, bei welchem hier beispielhaft zwei, vorzugsweise äußere, längere Zinken als Erdkontakte 22 fungieren und ein mittlerer, kürzerer elektrischer Kontakt 23 über den Pulsformer mit der Hochspannung beaufschlagbar ist. Mit dieser Mittelelektrode 23 kann dabei spezifisch in eine zu behandelnde Pflanze 29 eingestochen werden und zugleich mit den äußeren Zinken der Gegenpol 22 mit dem Erdreich 26 verbunden werden, sodass eine gezielte elektrische Einwirkung auf das Wurzelwerk der Pflanze 29 (als Weg des geringsten elektrischen Widerstands) erfolgen kann. Die elektrische Einwirkung kann dabei durch ein Bedienelement 9 durch den Benutzer 30 ausgelöst werden.

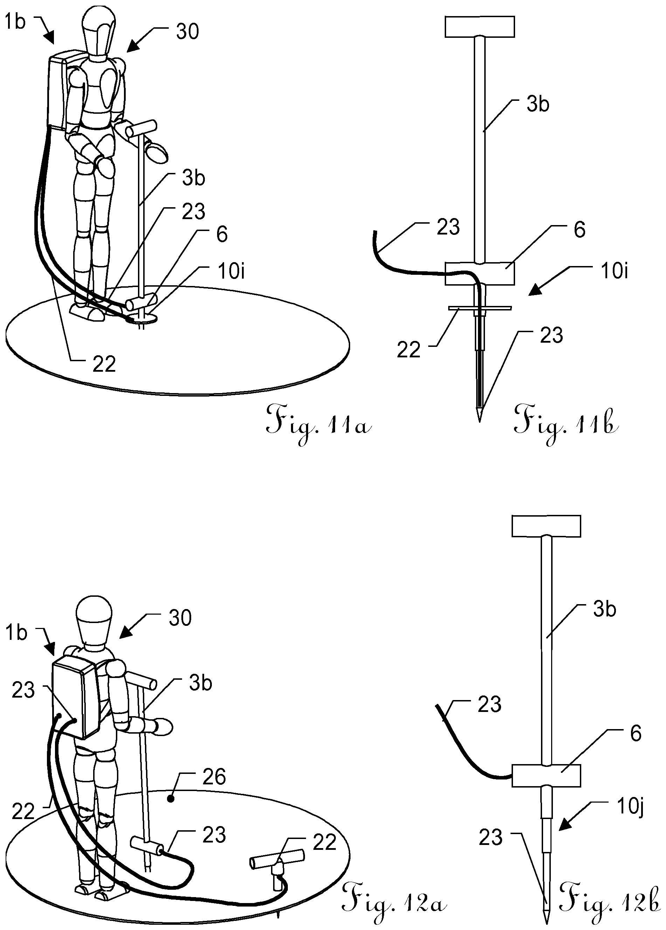

**Fig. 11a** sowie **Fig. 11b** zeigen eine beispielhafte Ausführungsform einer erfindungsgemäßen Variante eines beispielhaften Applikators 10i in Form eines Plackennagels oder Blacken-Stechers, welcher über den Handgriff 3b in den Erdboden bzw. die zu behandelnde Pflanze gesteckt wird. Der Applikator 10i ist hierbei mit zwei integrierten Elektroden 22 und 23 ausgeführt, von welchen eine erste Elektrode 22 tellerförmig als Erdkontakt bzw. als Pflanzenblatt-Kontakt ausgebildet ist und eine zweite Elektrode 23 als nagelförmiger Stichel ausgebildet ist, mit welchem ein Einstechen in Pflanze oder deren Pflanzenwurzel erfolgen kann. Der dadurch entstehende Stromkreis findet vorwiegend in der Pflanze statt, sodass die Hochspannungsimpulse sehr konzentriert applizierbar sind.

**Fig. 12a** sowie **Fig. 12b** zeigen eine beispielhafte Ausführungsform einer erfindungsgemäßen Variante eines beispielhaften Applikators 10j, bei welchem ähnlich wie zuvor die Hochspannungselektrode 23 als Spieß oder Nagel ausgebildet ist. Der zugehörige Pulsformer kann hierbei beispielsweise im Kopplungselement 6 bereitgestellt werden. In dieser Ausführungsform wird dabei jedoch eine separate Erdungselektrode 22 genutzt, welche z.B. auch als konduktiver Erdspieß ausgebildet sein kann, alternativ kann aber auch eine andere Form einer elektrischen Kopplung zum Erdboden 26 hergestellt werden, welche optional auch zumindest teilweise kapazitiv erfolgen kann.

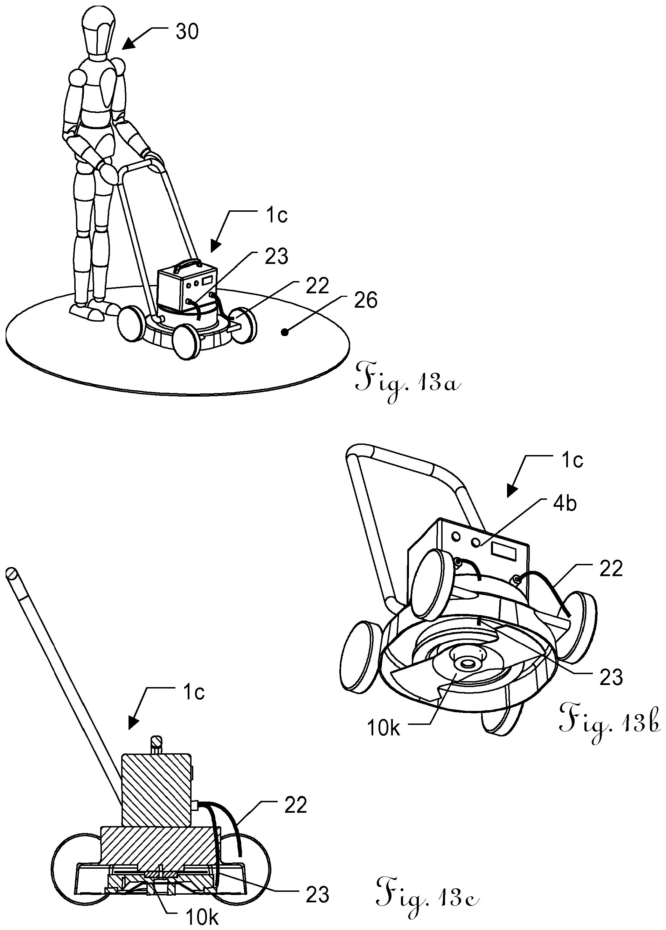

**Fig. 13a** zeigt eine spezielle beispielhafte Ausführungsform eines erfindungsgemäßen Systems zur elektrischen Bekämpfung von unerwünschtem Pflanzenwuchs, bei welchem das Basisgerät 1c als Aufbau auf Sichelmäher oder auch auf einem anderweitig als Mäher ausgelegten Gerät angebracht oder integriert ist. Der Benutzer kann das Gerät 1c dabei mit seinen Rädern über den zu behandelnden Boden 26 schieben. Dabei kann zumindest eines der Räder auch als elektrischer Kontakt 22 zum Erdboden 26 ausgebildet sein. Alternativ oder zusätzlich kann ein derartiger elektrischer Kontakt 22 zum Erdboden 26 aber auch über ein oder mehrere Schleifer, Bürsten, Platten, Harken, etc. hergestellt werden.

Wie in **Fig. 13b** und **Fig. 13c** illustriert, wird die Hochspannungselektrode 23 über den Pulsformer an das Schneidwerkzeug als Applikator 10k elektrisch verbunden. Der Pulsformer kann dabei speziell dermaßen ausgebildet sein, dass unabhängig von der Stellung des Schneidwerkzeuges 10k oder auch nur in bestimmten Abschnitten der Bewegung des Schneidwerkzeuges 10k eine Entladung stattfinden kann. Speziell aufgrund der feuchten Schnittflächen beim Mähen entsteht eine intensive Einleitung der pulsgeformten Hochspannung in den Pflanzenwuchs bis hin zu dessen Wurzelwerk. Die gezeigten Bedienelemente 4b des Basisgeräts 1c können alternativ auch anderswo, z.B. am Handgriff des Mähers angeordnet sein.

Die Energieversorgung, aus welcher die elektrische Hochspannung generiert wird, kann dabei dieselbe sein mit welcher auch das Mähwerk und/oder ein Fahrmotor angetrieben wird, kann optional aber auch von dieser getrennt werden. Neben einem derartigen Komplettsystem betrifft die vorliegende Erfindung auch einen Nachrüstsatz, mit welcher eine bestehende Mäheinheit mit einer erfindungsgemäßen Hochspannungs-Pflanzenschädigung nachgerüstet werden kann, speziell bestehend aus einem Hochspannungsgenerator, den Elektroden 22 und 23 sowie deren elektrischen Anschlüssen, sowie dem Pulsformer und allenfalls einem speziellen Applikator 10k.

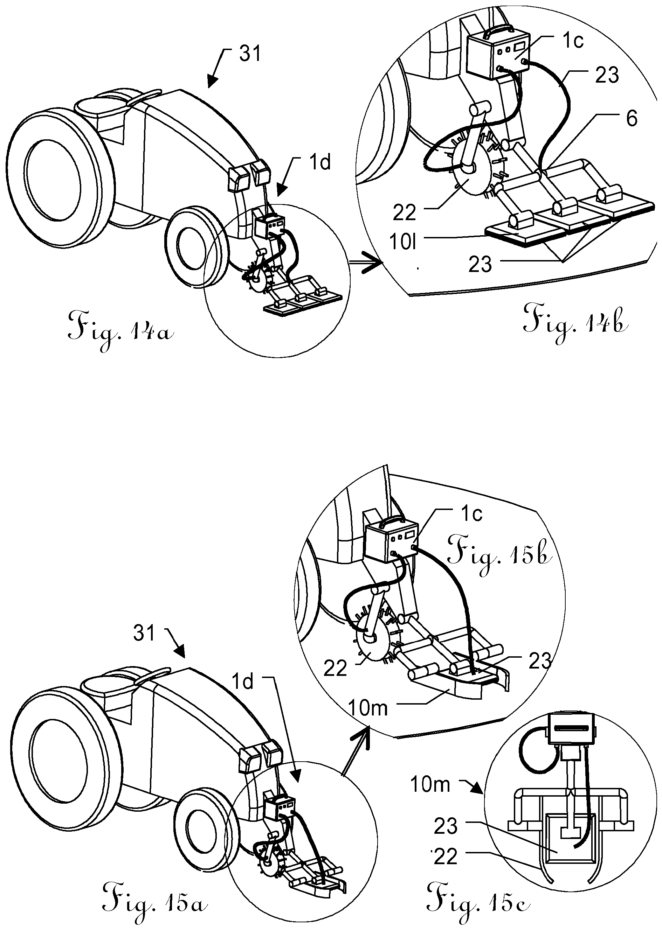

**Fig. 14a** sowie **Fig. 14b** zeigen eine beispielhafte Ausführungsform einer erfindungsgemäßen Variante eines beispielhaften Basisgeräts 1c sowie eines zugehörigen Applikators 10l, welcher jeweils als Anbaugerät 1d für ein Fahrzeug 31 und/oder fest in das Fahrzeug 31 integriert ausgebildet sein kann. Als Anbaugerät 1d kann diese an beliebige Fahrzeuge 31 angebaut werden, speziell z.B. an Traktoren, Kleintraktoren, Unimog oder andere Landmaschinen. Ein oder mehrere derartiger Anbaugeräte 1d können dabei entweder direkt oder über Bewegungsarme temporär oder fix am Fahrzeug 31 angebaut sein. Eine Energieversorgung kann dabei intern im Anbaugerät 1d selbst und/oder vom Fahrzeug 31 bereitgestellt werden, beispielsweise über einen Anschluss an ein elektrisches Fahrzeug-Bordnetz, eine Zapfwelle, etc. Speziell kann dabei, insbesondere mit einer Energieversorgung vom Fahrzeug 31 her, ein erfindungsgemäßes Gerät 1d mit größerer elektrischer Leistung, mit einer Mehrzahl parallelen Kanälen und/oder mit größerer Bauform ausgeführt werden. Mehrere Elektroden 23 können dabei also einzeln oder als vielfaches angebaut werden, wobei dabei insbesondere die Elektroden 23 einzeln und bevorzugt unabhängig, elektrisch angesteuert werden.

Ein hier gezeigtes Rad, alternativ oder zusätzlich kann aber auch eine elektrisch leitende Platte, ein Schleifer, eine Harke oder eine Bürste dabei den Erdkontakt 22 des Gegenpols herstellen. Dabei kann der Erdkontakt über eine einzelne oder gemeinsamen Elektrode oder auch mehrfach ausgeführt sein.

Insbesondere bei einem externen Anbau an das Fahrzeug kann das Anbaugerät 1d zum Schutz mit einer Abdeckung verkleidet sein, welche zugleich auch als elektromagnetische Abschirmung dienen kann. Auch in der Anbaugerät-Variante der vorliegenden Erfindung können wiederum unterschiedliche, anwendungsspezifische Applikatoren 10l über ein mechanisches und/oder elektrisches Kopplungselement austauschbar sein.

**Fig. 15a, Fig. 15b** sowie **Fig. 15c** zeigen eine beispielhafte Ausführungsform einer erfindungsgemäßen Variante eines Anbaugeräts 1d an einem Fahrzeug 31 mit einem anderen beispielhaften Applikator 10m. Bei dieser Ausführungsform 10m wird durch entsprechende Abweiser, Scharen oder Trenner Wildkraut oder Unkraut von den zu erhaltenden Nutzpflanzen - wie z.B. in Reihen oder Gruppen gepflanztes Gemüse oder Kulturen - getrennt. Damit können unerwünschte Pflanzen behandelt werden, ohne die Nutzpflanzen zu schädigen, indem diese Abweiser die vom Pulsformer kommende Hochspannung von den Nutzpflanzen hinreichend fernhalten und die Hochspannungs-Applikation 23 nur auf die unerwünschten Pflanzen wirken. Die Abweiser können dabei speziell mit der Erdungselektrode 22 verbunden sein oder diese ausbilden. Die Hochspannungselektroden und/oder die Abweiser können sowohl einzeln wie auch mehrfach am Fahrzeug 31 angebracht sein.

## Patentansprüche

1. Gerät (1) zur Bekämpfung unerwünschter Bodenvegetation (29), mit:
▪ einer elektrischen Spannungsversorgung (40) zur Bereitstellung eine Versorgungsspannung (41) im Klein- oder Niederspannungsbereich,
▪ einer elektrischen Hochsetzschaltung (42) zur Bereitstellung einer Hochspannung (43) aus der Versorgungsspannung (41),
▪ zumindest einem Applikator (10) mit zumindest einer Applikationselektrode (27) zur Übertragung von Hochspannungspulsen auf die unerwünschte Bodenvegetation (29),
wobei im elektrischen Pfad zum Applikator (10) ein kapazitiv wirkendes elektrisches Speicherelement (44) für die Hochspannung (43) angeordnet ist,
**dadurch gekennzeichnet, dass** ein Pulsformer (46) vorgesehen ist, welcher in einem elektrischen Pfad zwischen dem Speicherelement (44) und der zumindest einen Applikationselektrode (27) des Applikators (10) angeordnet ist, um eine Mindestspannung des Hochspannungspulses bei jeder Behandlung sicherzustellen während sich der Applikator (10) bzw.
dessen Applikationselektrode (27) in Berührung mit oder in unmittelbarer Nähe einer Pflanze (29) der Bodenvegetation befindet.

2. Gerät (1) nach Anspruch 1, **dadurch gekennzeichnet, dass** der Pulsformer (46) derart ausgebildet ist, dass
▪ mit einer definierten Mindestspannung der Hochspannung auf die unerwünschte Bodenvegetation (29) eingewirkt wird und
▪ diese Einwirkung einen hochfrequenten Anteil aufweist, insbesondere wobei Parameter der Hochspannungspulse variierbar sind.

3. Gerät (1) nach zumindest einem der Ansprüche 1 oder 2, **dadurch gekennzeichnet, dass** der Pulsformer (46) jeweils im Applikator (10) und in direkter örtlicher Nähe zu der Applikationselektrode (27) angeordnet ist.

4. Gerät (1) nach zumindest einem der Ansprüche 1 bis 3, **dadurch gekennzeichnet, dass** der Pulsformer (46) als eine definierte Funkenstrecke ausgebildet ist, insbesondere wobei die definierte Funkenstrecke mit zumindest zwei Elektroden in definiertem Elektrodenabstand ausgebildet ist und vorzugsweise in atmosphärischer Umgebung und belüftet.

5. Gerät (1) nach zumindest einem der Ansprüche 1 bis 4, **dadurch gekennzeichnet, dass** der Pulsformer (46) als Funkenstrecke zumindest teilweise im Applikator (10) ausgebildet ist, vorzugsweise in einer Schnittstelle eines Kopplungsstück (6) zwischen dem Applikator (10) und einem Basisgerät (1)..

6. Gerät (1) nach zumindest einem der Ansprüche 1 bis 5, **dadurch gekennzeichnet, dass** die Hochsetzschaltung (42) ausgebildet ist mit:
▪ einem Flyback-Konverter,
▪ einer Speicherdrossel,
▪ einem magnetischen Hochsetz-Übertrager,
▪ einer Ladungspumpe,
▪ einem Bandgenerator,
▪ einem Tesla-Transformator,
▪ einem Marx-Generator, und/oder
▪ einem Piezo-Generator.

7. Gerät (1) nach zumindest einem der Ansprüche 1 bis 6, **dadurch gekennzeichnet, dass** eine elektrisch leitende Verbindung vom einem ersten Pol des
Speicherelements (44) zu einem Untergrund der Bodenvegetation (29) und/oder
eine kapazitive elektrische Verbindung vom dem ersten Pol des Speicherelements (44) zu einem Untergrund der Bodenvegetation (29) erfolgt, und
der elektrische Pfad der Hochspannung über die Bodenvegetation (29), den Applikator (10), den Pulsformer (46) zu einem zweiten Pol des Speicherelements (44) geschlossen wird.

8. Gerät (1) nach zumindest einem der Ansprüche 1 bis 7, **dadurch gekennzeichnet, dass** das Gerät (1) als handhaltbares Basisgerät ausgebildet ist, bei welchem unterschiedliche Applikatoren (10) unter Herstellung einer mechanischen und elektrischen Verbindung auswechselbar sind.

9. Gerät (1) nach zumindest einem der Ansprüche 1 bis 7, **dadurch gekennzeichnet, dass** das Gerät (1) als Anbaugerät an ein Fahrzeug ausgebildet ist, insbesondere wobei die Versorgungsspannung (41) von dem Fahrzeug bereitgestellt wird.

10. Gerät (1) nach einem der Ansprüche 8 bis 9, **dadurch gekennzeichnet, dass** das Gerät (1) als Mäher ausgebildet ist und eine Schneide des Mähers als Applikator (10) ausgebildet ist.

11. Applikator (10) ausgebildet für ein Gerät (1) nach einem der Ansprüche 1 bis 10, wobei der Applikator (10) ausgebildet ist mit zumindest einer Applikationselektrode (27), ausgebildet zum Kontakt mit einem zu schädigenden Pflanzenwuchs (29) und ausgewählt aus der Gruppe bestehend aus:
▪ einer spitzförmigen Lanze,
▪ einer oder mehrerer Plattenelektroden,
▪ einem Greifer,
▪ einer Schneide, und/oder
▪ einem Rad,
wobei der Applikator mit einer integrierten oder externen Erdungselektrode ausgebildet ist, **dadurch gekennzeichnet, dass** der Applikator austauschbar ausgebildet ist und wobei der Applikator einen Pulsformer oder wenigstens eine Elektrode eines als Funkenstrecke ausgebildeten Pulsformers, mit einer Leitungsverbindung zu der zumindest einen Applikationselektrode, umfasst.

12. Applikator (10) gemäss dem vorstehenden Anspruch, **dadurch gekennzeichnet, dass** der austauschbare Applikator (10) ein Speicherelement (44) aufweist, wobei der Pulsformer (46) in einem elektrischen Pfad zwischen dem Speicherelement und der zumindest einen Applikationselektrode (27) angeordnet ist.

13. Verfahren zur Vernichtung von Unkraut oder Begleitwuchs als zu behandelnde Pflanze mittels Hochspannungsimpulsen, mit
▪ einem Versorgen einer elektrischen Hochsetzschaltung (42) durch eine Spannungsquelle mit einer Klein- oder Niederspannung (41) von weniger als 1 kV aus einem Akku- oder von einem Generator,
▪ einem Hochsetzen der Klein- oder Niederspannung (41) mit der Hochsetzschaltung (42) zu einer Hochspannung (43) von mehr als 1 kV, insbesondere in einem Bereich von etwa 10 kV bis 40 kV,
▪ einem Bereitstellen von Hochspannungsimpulsen aus der Hochspannung, welches mit einem kapazitiven Zwischenpuffern der Hochspannung (43) mit einem primär kapazitiven elektrischen Bauelement (44) und einen anschließenden Pulsformen mit einem Pulsformer erfolgt, welches ein definiertes Entladen der Hochspannung mit einer Mindestspannung bewirkt, und
▪ einem Applizieren mit einem Entladen der pulsgeformten Hochspannungsimpulse in die zu behandelnde Pflanze mit einer Hochspannungs-Elektrode eines Applikators, welches derart erfolgt, dass durch die Hochspannungsentladungen eine Zellschädigung an der zu behandelnden Pflanze eintritt, wobei der Applikator bzw. eine Elektrode des Applikators die Pflanze berührt oder sich in unmittelbarer Nähe der Pflanze befindet.

14. Verfahren nach Anspruch 13, **dadurch gekennzeichnet, dass** das Pulsformen mit einer definierten Funkenstrecke ausgebildet ist, insbesondere wobei die Funkenstrecke zumindest teilweise im Applikator ausgebildet ist.

15. Methode zur Bekämpfung von unerwünschtem Pflanzenwuchs mit einem Verfahren nach Anspruch 13 oder 14, bei welchem ein Gerät nach einem der Ansprüche 1 bis 12 angewandt wird.

## Claims

1. A device (1) for controlling unwanted ground vegetation (29), comprising:
- an electrical power supply (40) for providing a supply voltage (41) in the extra-low or low voltage range,
- an electrical boost circuit (42) for providing a high voltage (43) from the supply voltage (41),
- at least one applicator (10) having at least one application electrode (27) for transmitting high-voltage pulses to the unwanted ground vegetation (29),
wherein a capacitively acting electrical storage element (44) for the high voltage (43) is arranged in the electrical path to the applicator (10),
**characterized in that** a pulse former (46) is provided, which is arranged in an electrical path between the storage element (44) and the at least one application electrode (27) of the applicator (10) to ensure a minimum voltage of the high-voltage pulse during each treatment while the applicator (10) or the application electrode (27) thereof is in contact with or in close proximity to a plant (29) of the ground vegetation.

2. The device (1) according to Claim 1, **characterized in that** the pulse former (46) is configured such that
- a defined minimum voltage for the high voltage acts on the unwanted ground vegetation (29), and
- said action has a high-frequency component, in particular wherein parameters of the high-voltage pulses are variable.

3. The device (1) according to at least one of Claims 1 and 2, **characterized in that** the pulse former (46) is arranged in the applicator (10) and in direct local proximity to the application electrode (27).

4. The device (1) according to at least one of Claims 1 to 3, **characterized in that** the pulse former (46) is configured as a defined spark gap,
in particular wherein the defined spark gap is formed by at least two electrodes at a defined electrode distance from one another, preferably in an atmospheric environment and with ventilation.

5. The device (1) according to at least one of Claims 1 to 4, **characterized in that** the pulse former (46) is configured as a spark gap at least in part in the applicator (10), preferably in an interface of a coupling piece (6) between the applicator (10) and a base device (1).

6. The device (1) according to at least one of Claims 1 to 5, **characterized in that** the boost circuit (42) is configured to have :
- a flyback converter,
- a storage inductor,
- a magnetic boost transformer,
- a charging pump,
- a band generator,
- a Tesla transformer,
- a Marx generator, and/or
- a piezoelectric generator.

7. The device (1) according to at least one of Claims 1 to 6, **characterized in that** an electrically conductive connection from a first pole of the storage element (44) to a subsurface of the ground vegetation (29) and/or
a capacitive electrical connection from the first pole of the storage element (44) to a subsurface of the ground vegetation (29) are/is established, and
the electrical path of the high voltage to a second pole of the storage element (44) is closed by the ground vegetation (29), the applicator (10) and the pulse former (46).

8. The device (1) according to at least one of Claims 1 to 7, **characterized in that** the device (1) is configured as a handheld base device, in which different applicators (10) can be exchanged while establishing a mechanical and electrical connection.

9. The device (1) according to at least one of Claims 1 to 7, **characterized in that** the device (1) is configured as an attachment to a vehicle, in particular wherein the supply voltage (41) is provided by the vehicle.

10. The device (1) according to any of Claims 8 to 9, **characterized in that** the device (1) is configured as a mower, and a cutter of the mower is configured as the applicator (10).

11. An applicator (10) configured for a device (1) according to any of Claims 1 to 10, wherein the applicator (10) is configured to have at least one application electrode (27), which is configured to make contact with a plant growth (29) to be damaged and is selected from the group consisting of:
- a pointed lance,
- one or more plate electrodes,
- a gripper,
- a cutter, and/or
- a wheel,
wherein the applicator is configured to have an integrated or external grounding electrode, **characterized in that** the applicator is configured to be exchangeable, and wherein the applicator comprises a pulse former or at least one electrode of a pulse former configured as a spark gap, with a lead connection to the at least one application electrode.

12. The applicator (10) according to the preceding claim, **characterized in that** the exchangeable applicator (10) has a storage element (44), wherein the pulse former (46) is located in an electrical path between the storage element and the at least one application electrode (27).

13. A method for destroying weeds or accompanying growth as a plant to be treated, by means of high-voltage pulses, comprising
- supplying an electrical boost circuit (42) with power by means of a voltage source having an extra-low or low voltage (41) of less than 1 kV from a battery or a generator,
- boosting the extra-low or low voltage (41) by means of the boost circuit (42) to a high voltage (43) of more than 1 kV, in particular in a range of around 10 kV to 40 kV,
- providing high-voltage pulses from the high voltage, which is carried out by capacitive intermediate buffering of the high voltage (43) by means of a primary capacitive electrical component (44) and by subsequent pulse forming by means of a pulse former, this bringing about a defined discharge of the high voltage at a minimum voltage, and
- applying a discharge of the pulse-formed high-voltage pulses to the plant to be treated by means of a high-voltage electrode of an applicator, which is carried out such that cells of the plant to be treated are damaged by the high-voltage discharges, wherein the applicator or an electrode of the applicator is touching the plant or is in close proximity to the plant.

14. The method according to Claim 13, **characterized in that** the pulse forming is configured as a defined spark gap, in particular wherein the spark gap is configured to be at least in part in the applicator.

15. A method for controlling unwanted plant growth by means of a method according to Claim 13 or 14, in which a device according to any of Claims 1 to 12 is used.

## Revendications

1. Appareil (1) de lutte contre la végétation du sol indésirable (29), avec :
- une alimentation en tension électrique (40) pour fournir une tension d'alimentation (41) dans la plage de basse ou très basse tension,
- un circuit de survoltage électrique (42) pour fournir une haute tension (43) à partir de la tension d'alimentation (41),
- au moins un applicateur (10) avec au moins une électrode d'application (27) pour transmettre des impulsions à haute tension sur la végétation du sol indésirable (29),
dans lequel un élément de stockage électrique à effet capacitif (44) destiné à la haute tension (43) est disposé sur le trajet électrique menant à l'applicateur (10),
**caractérisé en ce qu'**un formeur d'impulsion (46) est prévu, lequel est disposé sur un trajet électrique entre l'élément de stockage (44) et ladite électrode d'application au moins (27) de l'applicateur (10) pour assurer une tension minimale de l'impulsion à haute tension lors de chaque traitement, pendant que l'applicateur (10) ou son électrode d'application (27) se trouve en contact ou à proximité immédiate d'une plante (29) de la végétation du sol.

2. Appareil (1) selon la revendication 1, **caractérisé en ce que** le formeur d'impulsion (46) est conçu de telle sorte
- qu'une action s'exerce sur la végétation du sol indésirable (29) à une tension minimale définie de la haute tension et
- que cette action présente une part à haute fréquence, notamment dans lequel les paramètres des impulsions à haute fréquence sont variables.

3. Appareil (1) selon l'une au moins des revendications 1 ou 2, **caractérisé en ce que** le formeur d'impulsion (46) est disposé respectivement dans l'applicateur (10) et à proximité immédiate de l'électrode d'application (27).

4. Appareil (1) selon l'une au moins des revendications 1 à 3, **caractérisé en ce que** le formeur d'impulsion (46) est conçu sous la forme d'un éclateur défini, notamment dans lequel l'éclateur défini est constitué d'au moins deux électrodes à une distance définie, de préférence dans un environnement atmosphérique et ventilé.

5. Appareil (1) selon l'une au moins des revendications 1 à 4, **caractérisé en ce que** le formeur d'impulsion (46) est conçu au moins en partie sous la forme d'un éclateur dans l'applicateur (10), de préférence dans une interface d'une pièce de couplage (6) entre l'applicateur (10) et un appareil de base (1).

6. Appareil (1) selon l'une au moins des revendications 1 à 5, **caractérisé en ce que** le circuit de survoltage (42) est conçu avec :
- un convertisseur Flyback,
- une bobine accumulatrice,
- un transmetteur survolteur magnétique,
- une pompe de charge,
- un générateur à ruban,
- un transformateur de Tesla,
- un générateur de Marx et/ou
- un générateur piézoélectrique.

7. Appareil (1) selon l'une au moins des revendications 1 à 6, **caractérisé en ce qu'**une connexion électriquement conductrice est réalisée d'un premier pôle de l'élément de stockage (44) à un sol couvert de la végétation du sol (29) et/ou
qu'une connexion électrique à effet capacitif est réalisée du premier pôle de l'élément de stockage (44) à un sol couvert de la végétation du sol (29), et
que le trajet électrique de la haute tension est bouclé par le biais de la végétation du sol (29), de l'applicateur (10) et du formeur d'impulsion (46) jusqu'à un second pôle de l'élément de stockage (44).

8. Appareil (1) selon l'une au moins des revendications 1 à 7, **caractérisé en ce que** l'appareil (1) est conçu sous la forme d'un appareil de base portable, sur lequel divers applicateurs (10) sont interchangeables moyennant l'établissement d'une connexion électrique et mécanique.

9. Appareil (1) selon l'une au moins des revendications 1 à 7, **caractérisé en ce que** l'appareil (1) est conçu sous la forme d'un accessoire monté sur un véhicule, notamment dans lequel la tension d'alimentation (41) est fournie par le véhicule.

10. Appareil (1) selon l'une quelconque des revendications 8 à 9, **caractérisé en ce que** l'appareil (1) est conçu sous la forme d'une faucheuse et qu'une lame de la faucheuse est conçue sous la forme d'applicateur (10).

11. Applicateur (10) conçu pour un appareil (1) selon l'une quelconque des revendications 1 à 10, dans lequel l'applicateur (10) est conçue d'avoir au moins une électrode d'application (27), conçu pour entrer en contact avec une végétation à détruire (29) et sélectionné parmi le groupe consistant en :
- une lance en forme de pointe,
- une ou plusieurs électrodes à plaque,
- un préhenseur ou grappin,
- une lame, et/ou
- une roue,
dans lequel l'applicateur est conçue d'avoir une électrode de mise à la terre intégrée ou externe, **caractérisé en ce que** l'applicateur est conçu sous une forme interchangeable et dans lequel l'applicateur comprend un formeur d'impulsion ou au moins une électrode d'un formeur d'impulsion conçu sous la forme d'un éclateur, avec une connexion de ligne à au moins une électrode d'application.

12. Applicateur (10) selon la revendication précédente, **caractérisé en ce que** l'applicateur interchangeable (10) présente un élément de stockage (44), dans lequel le formeur d'impulsion (46) est disposé sur un trajet électrique entre l'élément de stockage et ladite électrode d'application au moins (27).

13. Procédé de destruction de mauvaises herbes ou de végétation adventice considérées comme des plantes à traiter au moyen d'impulsions à haute tension, avec
- l'alimentation d'un circuit de survoltage électrique (42) par une source de tension en une basse ou très basse tension (41) inférieure à 1 kV provenant d'un accumulateur ou d'un générateur,
- l'élévation de la basse ou très basse tension (41) avec le circuit de survoltage (42) jusqu'à une haute tension (43) supérieure à 1 kV, notamment dans une plage d'environ 10 kV à 40 kV,
- la fourniture des impulsions à haute tension à partir de la haute tension, ce qui est réalisé par un stockage intermédiaire capacitif de la haute tension (43) avec un module électrique capacitif primaire (44) et par une formation d'impulsion ultérieure avec un formeur d'impulsion, ce qui induit une décharge définie de la haute tension avec une tension minimale, et
- l'application d'une décharge des impulsions à haute tension dûment formées dans la plante à traiter avec une électrode à haute tension d'un applicateur, ce qui est réalisé de telle sorte qu'une détérioration cellulaire se produit sur la plante à traiter du fait des décharges à haute tension, dans lequel l'applicateur ou une électrode de l'applicateur touche la plante ou se trouve à proximité immédiate de la plante.

14. Procédé selon la revendication 13, **caractérisé en ce que** la formation d'impulsion est conçue sous la forme d' un éclateur défini, notamment dans lequel l'éclateur est conçu de telle sorte à être au moins en partie dans l'applicateur.

15. Méthode pour lutter contre une végétation indésirable avec un procédé selon la revendication 13 ou 14, lors duquel il est fait usage d'un appareil selon l'une quelconque des revendications 1 à 12.
